# EUROPEAN PATENT APPLICATION

(11) **EP 2 326 100 A2**
(43) Date of publication of application: **25.05.2011**
(21) Application number: 10191011.5
(22) Date of filing: 12.11.2010
(51) Int. Cl.: H04N 13/00

(54) **Method for Providing Three-Dimensional (3D) Image, Method for Converting 3D Message, Graphical User Interface (GUI) Providing Method Related to 3D Image, and 3D Display Apparatus and System for Providing 3D Image**

(30) Priority: 25.11.2009 KR 20090114582; 23.11.2009 KR 20090113215; 25.11.2009 KR 20090114588; 23.11.2009 KR 20090113208
(71) Applicant: SAMSUNG ELECTRONICS CO., LTD., Suwon-si Gyeonggi-do 442-742 (KR)
(72) Inventor: Han, Ji-youn, Gyeonggi-do (KR); Ko, Chang-seog, Gyeonggi-do (KR)
(74) Representative: Rooney, John-Paul

(57) **Abstract**

A three-dimensional (3D) image providing method and a display apparatus using the same are provided. According to the 3D image providing method, if a particular manipulation is input (5630) from a user in the two-dimensional (2D) mode, whether an input image is a 2D image or a 3D image is detected. If the input image is the 3D image (5650), the display mode is changed to the 3D mode and the 3D image is displayed (5660). If the input image is the 2D image, the input 2D image is converted to a 3D image (5655) and the converted 3D image is displayed by changing the display mode to the 3D mode (5660). Thus, regardless of whether the input image is the 2D image or the 3D image, users can execute the 3D mode using the single manipulation.

## Description

### CROSS-REFERENCE TO RELATED APPLICATIONS

This application claims priority under 35 U.S.C. § 119 (a) from Korean Patent Application No. 10-2009-0114582 filed on November 25, 2009, No. 10-2009-0113215 filed on November 23, 2009, No. 10-2009-0114588 filed on November 25, 2009, and No. 10-2009-0113208 filed on November 23, 2009, in the Korean Intellectual Property Office, the entire disclosure of which is incorporated herein by reference.

### BACKGROUND OF THE INVENTION

### Field of the Invention

Aspects of the present invention generally relates to a three-dimensional (3D) image providing method, a 3D image converting method, and a graphical user interface (GUI) providing method, and a 3D display apparatus and a 3D providing system using the same. More specifically, the aspects of the present invention relates to a 3D image providing method for representing a 3D image by alternately displaying a left-eye image and a right-eye image on a screen, a 3D converting method, a GUI providing method, and a 3D display apparatus and a 3D image providing system using the same.

### Description of the Related Art

Three-dimensional (3D) stereoscopy is applied in various fields such as information communication, broadcasting, medical care, educational training, military, game, animation, virtual space, CAD, and industrial technology, and is the core technology of next-generation 3D stereoscopic multimedia information communications, which is commonly required in the various fields.

In general, a human perceives relative depths using thickness variation of lenses based on a location of an object to perceive, an angle difference between both eyes and the object, location and shape differences of the object perceived by two eyes, a time difference according to movement of the object, psychology, effect from memories, etc.

Among them, binocular disparity resulting from the horizontal separation about 6-7 cm between two eyes of the human, is an important factor in stereopsis. The human perceives the object with the angle difference because of the binocular disparity, the two retinal images have different images, and these two images are input to the brain through the retinas. The brain can extract the original 3D stereoscopic vision by actually uniting the two pieces of information.

Stereoscopic display apparatuses are categorized into a glass type using special glasses and a non-glass type without using special glasses. The glass type includes a color filter scheme which separates and selects the image using complementary color filters, a polarized glass scheme which separates left-eye and right-eye images by restricting the light using combination of orthogonal polarizing elements, and a shutter glass scheme which creates the illusion of the 3D image by alternately darkening over the left eye and the right eye in correspondence with a synchronization signal projecting the left-eye image signal and the right-eye image signal on the screen.

The shutter glass scheme, which displays the image using the disparity of two eyes, perceives the relative depths of the image perceived at the different angles in the brain by synchronizing the image presentation of the display apparatus and the on/off state of the left-eye and right-eye lenses of the glasses.

Meanwhile, to view the 3D image, a user needs to change the display apparatus into a 3D mode. Mostly, depending on whether the image input to the 3D display apparatus is a 2D image or a 3D image, the 3D mode is entered through different manipulation.

However, it may be hard for the user to determine whether the current input image is the 2D image or the 3D image. That is, it may be hard for the user to classify the type of the current input image.

Users may prefer to use the 3D mode more easily without having to recognize whether the input image is the 2D image or the 3D image. For doing so, a method is needed for the user to view the 3D image on the display apparatus far more easily.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

Another aspect of the present invention provides a display apparatus, a 3D image providing method, and a 3D image providing system for simply and rapidly displaying an input 3D image.

Yet another aspect of the present invention provides a display apparatus, a 3D image converting method, and a 3D image providing system for setting to automatically determine a format of an input 3D image.

Still another aspect of the present invention provides a GUI providing method for a 3D image for allowing a user to change settings of the 3D image more easily and simply, and a display apparatus using the same.

According to an aspect of the present invention, there is provided a three-dimensional (3D) image providing method of a display apparatus capable of operating a display mode in a 2D mode for displaying a 2D image and in a 3D mode for displaying a 3D mode, which includes when a particular manipulation is input from a user in the 2D mode, detecting whether an input image is a 2D image or a 3D image; when the input image is the 3D image, changing the display mode to the 3D mode and displaying the 3D image; when the input image is the 2D image, converting the input 2D image to a 3D image; and displaying the converted 3D image by changing the display mode to the 3D mode.

The converting may convert to the 3D image including a left-eye image and a right-eye image generated based on the 2D image.

The converting may convert the 2D image to the 3D image of a format supportable by the display apparatus.

The 3D image providing method may further include when the particular manipulation is re-input from the user in the 3D mode, changing the display mode to the 2D mode.

According to another aspect of the present invention, a display apparatus capable of operating a display mode in a 2D mode for displaying a 2D image and in a 3D mode for displaying a 3D mode, includes a manipulator for receiving a manipulation of a user; and a controller for detecting whether an input image is a 2D image or a 3D image when a particular manipulation is input through the manipulator in the 2D mode, controlling to display the 3D image by changing the display mode to the 3D mode when the input image is the 3D image, and, and when the input image is the 2D image, converting the input 2D image to a 3D image and controlling to display the converted 3D image by changing the display mode to the 3D mode.

The controller may convert to the 3D image including a left-eye image and a right-eye image generated based on the 2D image.

The controller may convert the 2D image to the 3D image of a format supportable by the display apparatus.

When the particular manipulation is re-input through the manipulator in the 3D mode, the controller may change the display mode to the 2D mode.

According to yet another aspect of the present invention, a display apparatus includes an image input part for receiving an input; a controller for detecting whether a 3D image is input to the image input part, and when the 3D image is input to the image input part, automatically changing to a 3D image mode and determining a format of the input 3D image; a 3D image creator for generating a left-eye image and a right-eye image corresponding to the input 3D image according to the determined format; and an image output part for alternately outputting the left-eye image and the right-eye image.

The display apparatus may further include a GUI generator for generating a GUI which guides that the 3D image is displayed. The image output part may output the generated GUI in a side of a screen together with the left-eye image and the right-eye image.

The GUI generator may generate the GUI including at least one of information of the input 3D image and a menu used to receive a command to convert the 3D image to a 2D image.

When a conversion command to the 2D image is input through a manipulation of a user, the image output part may display only one of the left-eye image and the right-eye image of the generated 3D image.

According to still another aspect of the present invention, a 3D image providing method includes detecting whether a 3D image is input; when the 3D image is input, automatically entering a 3D image mode and determining a format of the input 3D image; generating a left-eye image and a right-eye image corresponding to the input 3D image according to the determined format; and alternately outputting the left-eye image and the right-eye image.

The 3D image providing method may further include generating a GUI which guides that the 3D image is displayed. The outputting may output the generated GUI in a side of a screen together with the left-eye image and the right-eye image.

The GUI generating may generate the GUI including at least one of information of the input 3D image and a menu used to receive a command to convert the 3D image to a 2D image.

When a conversion command to the 2D image is input through a manipulation of a user, the outputting may display only one of the left-eye image and the right-eye image of the generated 3D image.

According to a further aspect of the present invention, a 3D image providing system includes a display apparatus for detecting whether a 3D image is input, when detecting the input of the 3D image, automatically entering a 3D image mode and determining a format of the input 3D image, and generating and outputting a left-eye image and a right-eye image corresponding to the input 3D image according to the determined format; and shutter glasses for alternately opening and closing a left-eye glass and a right-eye glass based on a sync signal output from the display apparatus so as to alternately input the output left-eye images and the output right-eye images.

According to a further aspect of the present invention, a 3D converting method includes setting whether to automatically determine a format of a 3D image according to a manipulation of a user; receiving a 3D image; according to the setting whether to automatically determine the 3D image format, automatically determining or manually selecting the format of the 3D image; generating a left-eye image and a right-eye image corresponding to the input 3D image according to the determined or selected format; and alternately displaying the generated left-eye and right-eye images of the 3D image.

When setting to automatically determine the format of the input 3D image, the determining may include analyzing the format of the input 3D image; and automatically determining a 3D image format suited for the format of the input 3D image based on the analysis.

When setting not to automatically determine the format of the input 3D image, the selecting may include displaying a 3D image format manual selection menu; and selecting a format of the input 3D image in the 3D image format manual selection menu.

The 3D converting method may further include after automatically determining, executing and displaying a 3D image format manual selection menu according to a manipulation of the user; selecting a format of the 3D image in the 3D image format manual selection menu; generating a left-eye image and a right-eye image of the input 3D image in the selected 3D image format; and alternately displaying the generated left-eye and right-eye images.

According to a further aspect of the present invention, a display apparatus includes an image input part for receiving a 3D image; a controller for setting whether to automatically determine a format of the 3D image according to a manipulation of a user, and controlling to automatically determine or manually select the format of the 3D image according to the setting whether to automatically determine the 3D image format; a 3D image creator for generating a left-eye image and a right-eye image corresponding to the input 3D image according to the determined or selected format; and an image output part for alternately displaying the generated left-eye and right-eye images of the 3D image.

When setting to automatically determine the format of the input 3D image, the controller may analyze the format of the input 3D image and controls to automatically determine a 3D image format suited for the format of the input 3D image based on the analysis.

When setting not to automatically determine the format of the input 3D image, the controller may control to display a 3D image format manual selection menu and to select a format of the input 3D image in the displayed 3D image format manual selection menu according to a manipulation of the user, and the 3D image creator may generate the left-eye image and the right-eye image of the 3D image in the selected 3D image format.

The controller, after automatically determining, may control to display a 3D image format manual selection menu according to a manipulation of the user and to select a format of the input 3D image in the displayed 3D image format manual selection menu according to a manipulation of the user, and the 3D image creator may generate the left-eye image and the right-eye image of the input 3D image in the selected 3D image format.

According to a further aspect of the present invention, a 3D image providing system includes a display apparatus for setting whether to automatically determine a format of a 3D image according to a manipulation of a user, receiving a 3D image, automatically determining or manually selecting a format of the 3D image according to the setting whether to automatically determine the 3D image format, generating a left-eye image and a right-eye image corresponding to the input 3D image according to the determined or selected format, and alternately displaying the generated left-eye and right-eye images of the 3D image; and shutter glasses for alternately opening and closing a left-eye glass and a right-eye glass based on a sync signal output from the display apparatus so as to alternately input the displayed left-eye images and the displayed right-eye images.

According to a further aspect of the present invention, a GUI providing method for a 3D image includes when receiving a 3D image, generating a GUI to guide at least one setting manipulation for the 3D image; and trying to recognize a format to apply to the 3D image and displaying the 3D image applied by the recognized format together with the GUI.

The GUI may include at least one of an item for changing the format, an item for converting to a 2D image, an item for changing an output order of a left-eye image and a right-eye image of the 3D image, and an item for changing an output state of the 3D image.

The GUI may include information relating to a button required to select the item around each item.

The GUI providing method may further include when the button is selected, changing the GUI for guiding the setting manipulation to a GUI for the setting corresponding to the selected button among the format change, the conversion to the 2D image, the output order change, and the output state change.

According to a further aspect of the present invention, a display apparatus for displaying a 3D image includes an image receiver for receiving the 3D image; a GUI generator for generating a GUI to guide at least one setting manipulation for the 3D image; and a controller for adding the generated GUI to the 3D image, trying to recognize a format to apply to the 3D image, and applying the recognized format to the 3D image.

The GUI may include at least one of an item for changing the format, an item for converting to a 2D image, an item for changing an output order of a left-eye image and a right-eye image of the 3D image, and an item for changing an output state of the 3D image.

The GUI may include information relating to a button required to select the item around each item.

When the button is selected, the controller may control to change the GUI for guiding the setting manipulation to a GUI for the setting corresponding to the selected button among the format change, the conversion to the 2D image, the output order change, and the output state change.

### BRIEF DESCRIPTION OF THE DRAWING FIGURES

These and/or other aspects of the present general inventive concept will become apparent and more readily appreciated from the following description of the embodiments, taken in conjunction with the accompanying drawings of which:

FIG. 1 is a diagram of a 3D image providing system according to an exemplary embodiment of the present invention;

FIGS. 2A through 2F are diagrams of 3D image formats;

FIG. 3 is a block diagram of a TV according to an exemplary embodiment of the present invention;

FIG. 4 is a block diagram of shutter glasses according to an exemplary embodiment of the present invention;

FIGS. 5A, 5B and 5C are diagrams of a processing method based on the 3D image format;

FIG. 6 is a flowchart of a 3D image providing method according to an exemplary embodiment of the present invention;

FIG. 7 is a diagram of display of a 3D image and a 2D image on a screen in a 3D mode according to an exemplary embodiment of the present invention;

FIGS. 8A and 8B are diagrams of manipulation to display an input 3D image in a 2D mode and in the 3D mode according to an exemplary embodiment of the present invention;

FIGS. 9A and 9B are diagram of manipulation to display an input 2D image in the 2D mode and the 3D mode according to an exemplary embodiment of the present invention;

FIG. 10 is a detailed block diagram of a 3D TV according to an exemplary embodiment of the present invention;

FIG. 11 is a flowchart of a 3D image providing method according to an exemplary embodiment of the present invention;

FIG. 12 is a flowchart of a method for converting the 3D image to the 2D image according to another exemplary embodiment of the present invention;

FIG. 13 is a diagram of a 3D image providing process according to yet another exemplary embodiment of the present invention;

FIG. 14 is a detailed block diagram of the 3D TV according to an exemplary embodiment of the present invention;

FIG. 15 is a flowchart of a 3D image converting method according to an exemplary embodiment of the present invention;

FIG. 16A is a diagram of a process for automatically determining the format when an automatic determination of the 3D image format is set according to an exemplary embodiment of the present invention;

FIG. 16B is a diagram of a process for manually selecting the format when a manual selection of the 3D image format is set according to an exemplary embodiment of the present invention;

FIG. 17 is a diagram of the screen when the 3D image is received;

FIGS. 18A through 18D are diagrams of screens in which an item of a GUI is selected and the GUI is changed;

FIG. 19 is a diagram of a screen change when there is no user's manipulation; and

FIG. 20 is a flowchart of a GUI providing method according to an exemplary embodiment of the present invention.

### DETAILED DESCRIPTION OF THE EXEMPLARY EMBODIMENTS

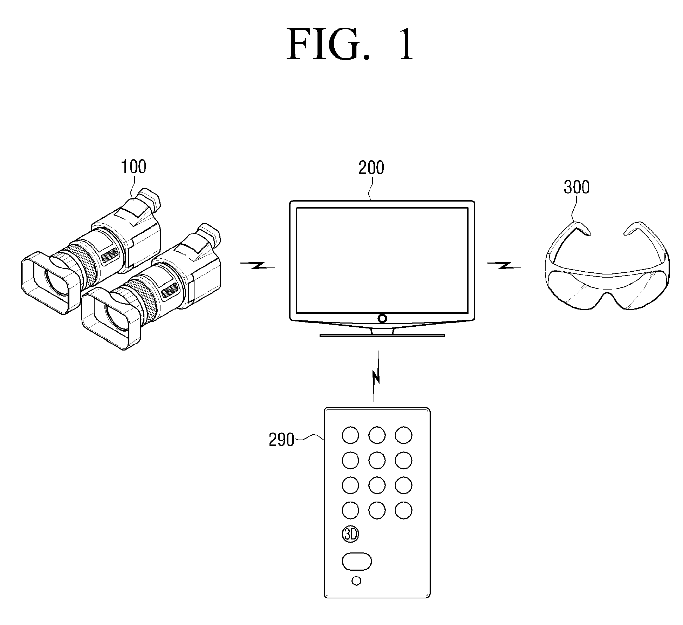

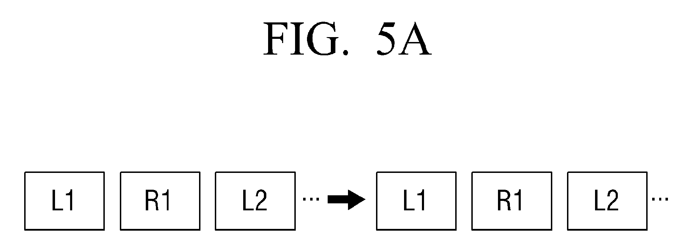

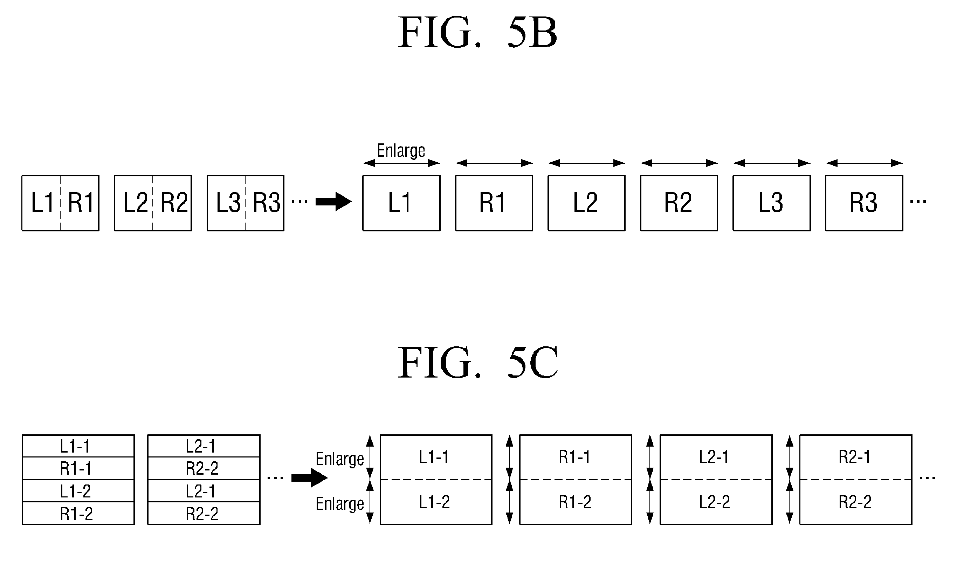

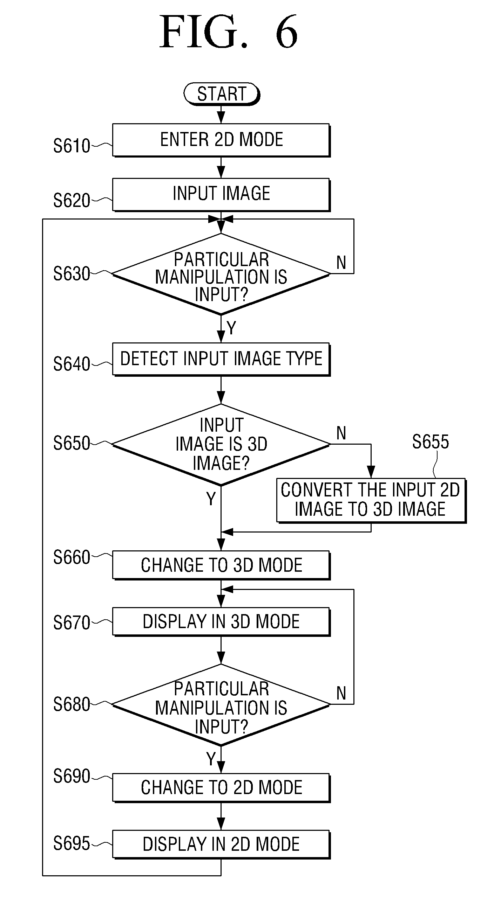

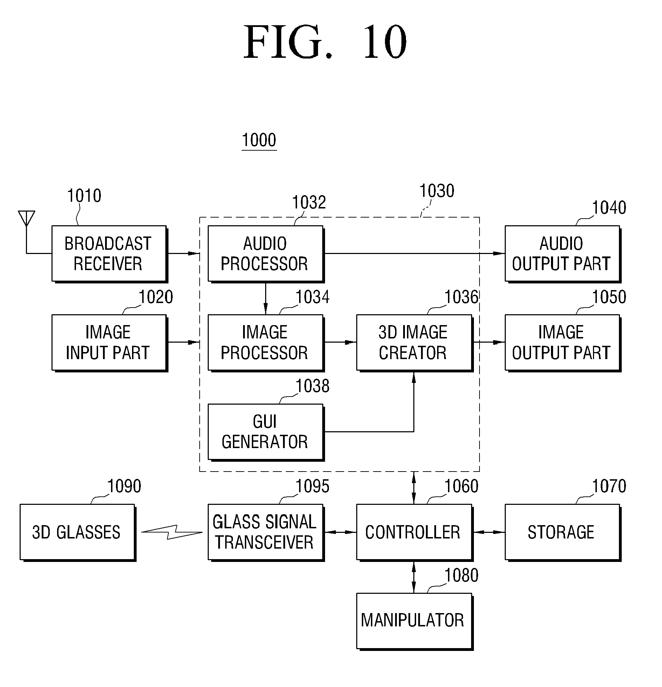

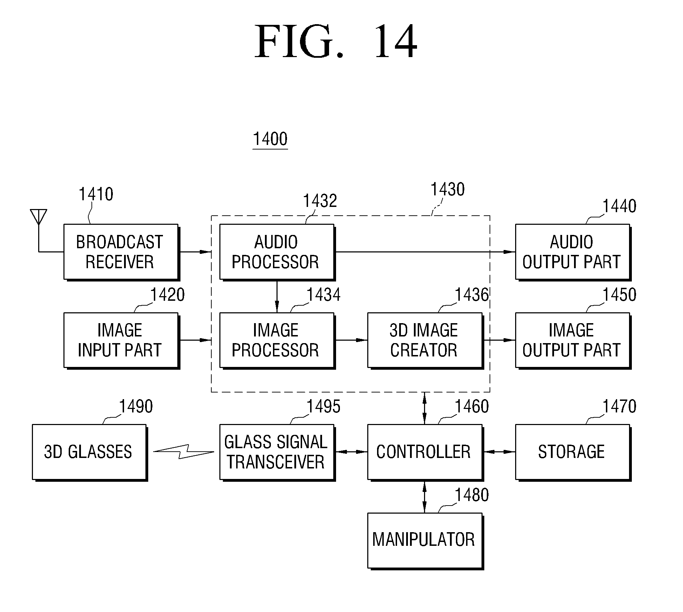

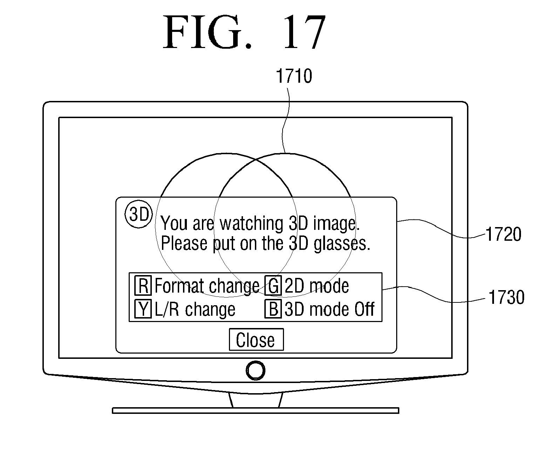

The embodiments are described below to explain the present invention by referring to the figures. By referring to FIGS. 1 through 4, an operation principle and a structure of a 3-Dimension (3D) image providing system are illustrated. By referring to FIGS. 5A, 5B and 5C, a 3D image processing is described. A 3D image providing method based on a 3D mode and a 2D mode is described in FIGS. 6 through 9B. A 3D image providing method by automatically determining a format is described in FIGS. 10 through 13. A method for changing the 2D image mode to the 3D image mode is explained in FIGS. 14 through 16B. A GUI providing method based on the 3D mode change is explained in FIGS. 17 through 20.

### < Operation principle and structure of the 3D image providing

FIG. 1 depicts a 3D image providing system according to an exemplary embodiment of the present invention. The 3D image providing system of FIG. 1 includes a camera 100 for generating a 3D image, a TV 200 for displaying the 3D image on a screen, a remote controller 290 for controlling the TV 200, and shutter glasses 300 for viewing the 3D image.

The camera 100, which is a kind of a photographing device for generating the 3D image, generates a left-eye image to be represented to a left eye of a user and a right-eye image captured to be represented to a right eye of the user. That is, the 3D image includes the left-eye image and the right-eye image. As the left-eye image and the right-eye image are alternately provided to the left eye and the right eye of the user, a stereoscopic image is presented by the binocular disparity.

The camera 100 includes a left-eye camera for generating the left-eye image and a right-eye camera for generating the right-eye image. An interval between the left-eye camera and the right-eye camera is determined based on a distance between two eyes of the human.

The camera 100 sends the left-eye image and the right-eye image captured to the TV 200. The left-eye image and the right-eye image transferred from the camera 100 to the TV are in a format including only one of the left-eye image and the right-eye image in one frame, or in a format including both of the left-eye image and the right-eye image in one frame.

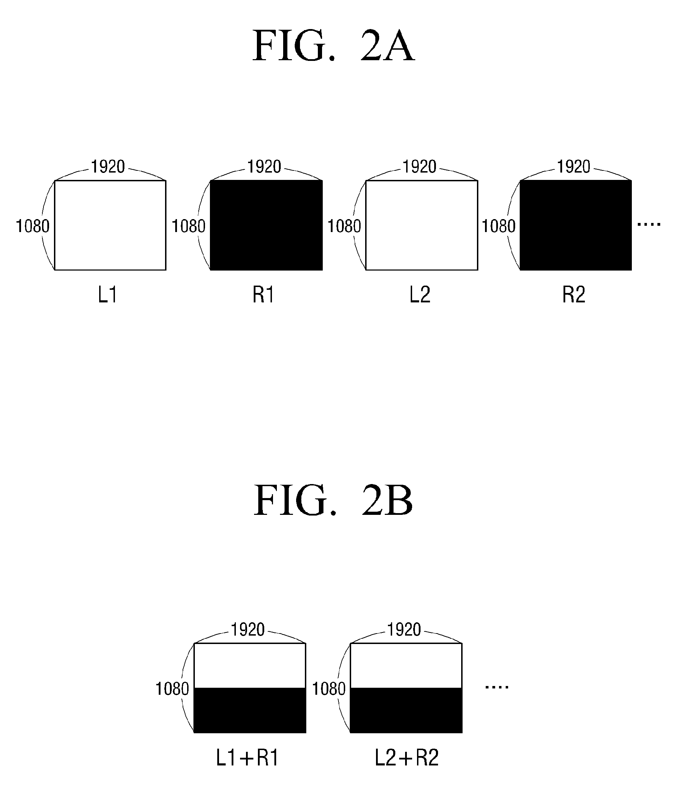

Hereafter, the format of the 3D image output to the TV 200 is described in detail by referring to FIGS. 2A through 2F.

FIGS. 2A through 2F are diagrams of 3D image formats. In FIGS. 2A through 2F, the left-eye image part is colored white and the right-eye image part is colored black to ease the understanding.

FIG. 2A depicts the 3D image format according to a general frame sequence scheme. According to the frame sequence scheme, the 3D image format inserts one left-eye image or one right-eye image to one frame.

In this format, a 3D image of a 1920*1080 resolution is constructed as 'a frame including the left-eye image L1 filmed by the left-eye camera -> a frame including the right-eye image R1 filmed by the right-eye camera -> a frame including the left-eye image L2 filmed by the left-eye camera -> a frame including the right-eye image R2 filmed by the right-eye camera ->...'.

FIG. 2B depicts the 3D image format according to a top & bottom scheme. The 3D image format includes both of the left-eye image and the right-eye image in one frame. In the 3D image format based on the top & bottom scheme, the left-eye image and the right-eye image are divided vertically, the left-eye image lies in the upper side, and the right-eye image lies in the lower side.

For doing so, the left-eye image and the right-eye image captured by the camera 100 are downscaled vertically and converted into a 1920*540 resolution respectively. Next, the converted images are united as a single frame in the 1920*1080 resolution and then transferred to the TV 200.

In this format, the 3D image of the 1920*1080 resolution is constructed as 'a frame including the left-eye image L1 (upper) filmed by the left-eye camera and the right-eye image R1 (lower) filmed by the right-eye camera -> a frame including the left-eye image L2 (upper) filmed by the left-eye camera and the right-eye image R2 (lower) filmed by the right-eye camera -> ...'.

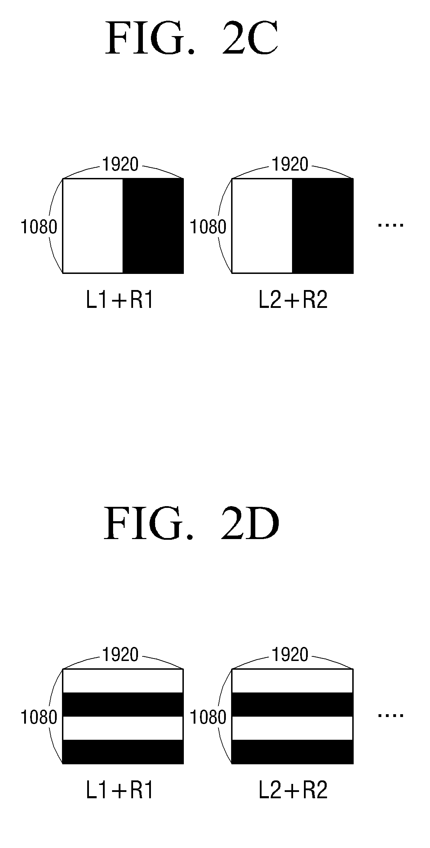

FIG. 2C depicts the 3D image format according to a side-by-side scheme. Based on the side-by-side scheme, the 3D image format includes both of the left-eye image and the right-eye image in one frame. In the 3D image format of the side-by-side scheme, the left-eye image and the right-eye image are divided horizontally, the left-eye image lies in the left side, and the right-eye image lies in the right side.

For doing so, the left-eye image and the right-eye image captured by the camera 100 are downscaled horizontally and converted to a 960*1080 resolution. Next, the converted images are united as a single frame of the 1920*1080 resolution and then transmitted to the TV 200.

In this format, the 3D image of the 1920*1080 resolution is constructed as 'a frame including the left-eye image L1 (left) filmed by the left-eye camera and the right-eye image R1 (right) filmed by the right-eye camera -> a frame including the left-eye image L2 (left) filmed by the left-eye camera and the right-eye image R2 (right) filmed by the right-eye camera -> ...'.

FIG. 2D depicts the 3D image format according to a horizontal interleave scheme. According to the horizontal interleave scheme, the 3D image format includes both of the left-eye image and the right-eye image in one frame. In the 3D image format of the horizontal interleave scheme, the left-eye image and the right-eye image are alternated on the row basis.

For doing so, the left-eye image and the right-eye image captured by the camera 100 can constitute one frame ① by downscaling in the vertical direction, converting to a 1920*540 resolution respectively, and alternating the converted left-eye image and the converted right-eye image in the odd row or in the even row on the row basis, or ② by extracting only odd-row images from the left-eye image, extracting only even-row images from the right-eye image, and uniting the odd-row images and the even-row images.

For example, the 3D image of the format ① constitutes one frame with 'the first row of the left-eye image (L1) filmed by the left-eye camera, the first row of the right-eye image (R1) filmed by the right-eye camera, the second row of the left-eye image (L1) filmed by the left-eye camera, the second row of the right-eye image (R1) filmed by the right-eye camera,

The next frame is constituted with 'the first row of the left-eye image (L2) filmed by the left-eye camera, the first row of the right-eye image (R2) filmed by the right-eye camera, the second row of the left-eye image (L2) filmed by the left-eye camera, the second row of the right-eye image (R2) filmed by the right-eye camera, ...'.

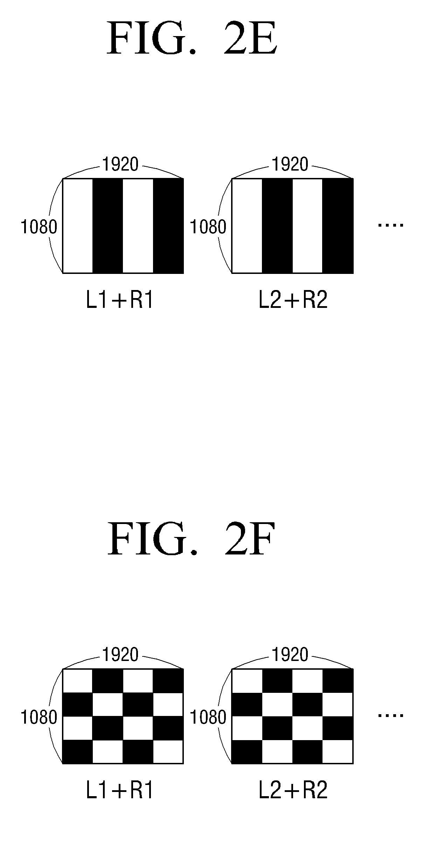

FIG. 2E depicts the 3D image format according to a vertical interleave scheme. According to the vertical interleave scheme, the 3D image format includes both of the left-eye image and the right-eye image in one frame. In the 3D image format of the vertical interleave scheme, the left-eye image and the right-eye image are alternated on the column basis.

For doing so, the left-eye image and the right-eye image captured by the camera 100 can constitute one frame ① by downscaling in the horizontal direction, converting to a 960*1080 resolution respectively, and alternating the converted right-eye image and the converted right-eye image in the odd column or in the even column on the column basis, or ② by extracting only odd-column images from the left-eye image, extracting only even-column images from the right-eye image and uniting the odd-column images, and the even-column images.

For example, the 3D image of the format ① constitutes one frame with 'the first column of the left-eye image (L1) filmed by the left-eye camera, the first column of the right-eye image (R1) filmed by the right-eye camera, the second column of the left-eye image (L1) filmed by the left-eye camera, the second column of the right-eye image (R1) filmed by the right-eye camera, ...'.

The next frame is constituted with 'the first column of the left-eye image (L2) filmed by the left-eye camera, the first column of the right-eye image (R2) filmed by the right-eye camera, the second column of the left-eye image (L2) filmed by the left-eye camera, the second column of the right-eye image (R2) filmed by the right-eye camera, ...'.

FIG. 2F depicts the 3D image format according to a checkerboard scheme. According to the checkerboard scheme, the 3D image format includes both of the left-eye image and the right-eye image in one frame. The 3D image format based on the checkerboard scheme alternates the left-eye image and the right-eye image on the pixel basis or the pixel group basis.

For doing so, the left-eye image and the right-eye image captured by the camera 100 are extracted on the pixel basis or on the pixel group basis and alternated in pixels or pixel groups constituting the frame.

For example, the 3D image format based on the checkerboard scheme constitutes one frame with 'the first row and the first column of the left-eye image (L1) filmed by the left-eye camera, the first row and the second column of the right-eye image (R1) filmed by the right-eye camera, the first row and the third column of the left-eye image (L1) filmed by the left-eye camera, the first row and the fourth column of the right-eye image (R1) filmed by the right-eye camera, ...'.

The next frame is constituted with 'the first row and the first column of the left-eye image (L2) filmed by the left-eye camera, the first row and the second column of the right-eye image (R2) filmed by the right-eye camera, the first row and the third column of the left-eye image (L2) filmed by the left-eye camera, the first row and the fourth column of the right-eye image (R2) filmed by the right-eye camera, ...'.

Referring back to FIG. 1, the camera 100 predetermines one of those formats and sends the 3D image to the TV 200 in the determined format.

The TV 200, which is a display apparatus, receives the 3D image from a photographing device such as camera 100 or the 3D image which is filmed by the camera 100, edited and processed at a broadcasting station, and transmitted from the broadcasting station, processes the received 3D image, and then displays the processed 3D image on the screen. The TV 200 processes the left-eye image and the right-eye image by referring to the 3D image format, time-divides and alternately displays the processed left-eye image and right-eye image.

Also, the TV 200 generates a sync signal synchronized with the timing of time-dividing and displaying the left-eye image and the right-eye image, and sends the sync signal to the shutter glasses 300.

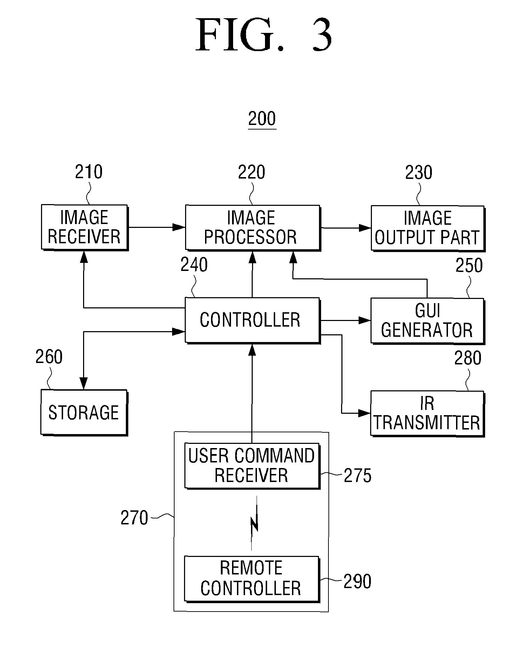

A structure of the TV 200 is detailed by referring to FIG. 3. FIG. 3 is a block diagram of the TV 200 according to an exemplary embodiment of the present invention.

The TV 200 includes an image receiver 210, an image processor 220, an image output part 230, a controller 240, a Graphic User Interface (GUI) generator 250, a storage 260, a manipulator 270, and an IR transmitter 280.

The image receiver 210 receives and demodulates the broadcast from the broadcasting station or a satellite by cable or by radio. The image receiver 210 is connected with an external device such as camera 100 to receive the 3D image from the external device. The external device can be connected by wireless or by wire through the interface such as S-Video, Component, Composite, D-Sub, DVI, and HDMI.

The 3D image includes at least one frame as stated above. One image frame includes both of the left-eye image and the right-eye image, or each individual frame includes the left-eye image or the right-eye image. Namely, the 3D image is generated based on one of the formats aforementioned.

Accordingly, the 3D image received at the image receiver 210 can be various. In particular, the format can conform to one of the general frame sequence scheme, the top & bottom scheme, the side-by-side scheme, the horizontal interleave scheme, the vertical interleave scheme, and the checkerboard scheme.

The image receiver 210 forwards the received 3D image to the image processor 220.

The image processor 220 applies the signal processing such as video decoding, format analyzing, and video scaling, and adds the GUI to the 3D image received from the image receiver 210.

The image processor 220 generates a left-eye image and a right-eye image corresponding to the screen size (1920*1080) using the format of the 3D image input from the image receiver 210.

When the 3D image format conforms to the top & bottom scheme, the side-by-side scheme, the horizontal interleave scheme, the vertical interleave scheme, or the checkerboard scheme, the image processor 220 extracts the left-eye image part and the right-eye image part from each image frame, upscales or interpolates the extracted left-eye image and right-eye image, and thus generates the left-eye image and the right-eye image to represent to the user.

When the 3D image format conforms to the general frame sequence scheme, the image processor 220 extracts the left-eye image or the right-eye image from each frame and prepares to represent them to the user.

The generation of the left-eye image and the right-eye image based on the 3D image format shall be described.

Meanwhile, information relating to the format of the input 3D image may or may not be contained in the 3D image signal.

For example, when the format information of the input 3D image is contained in the 3D image signal, the image processor 220 extracts the format information by analyzing the 3D image and processes the received 3D image according to the extracted information. Conversely, when the format information of the input 3D image is not contained in the 3D image signal, the image processor 220 processes the received 3D image according to the format input from the user or according to a preset format.

The image processor 220 adds the GUI output from the GUI generator 250, which shall be explained, to the left-eye image, the right-eye image, or both.

The image processor 220 time-divides the extracted left-eye image and right-eye image and alternately sends the images to the image output part 230. That is, the image processor 220 outputs the left-eye image and the right-eye image to the image output part 230 in the temporal order of 'the left-eye image (L1) -> the right-eye image (R1) -> the left-eye image (L2) -> the right-eye image (R2) -> ...'.

The image output part 230 alternately represents the left-eye image and the right-eye image output from the image processor 220, to the user.

The GUI generator 250 generates the GUI to display on a display. The GUI generated at the GUI generator 250 is applied to the image processor 220 and added to the left-eye image, the right-eye image, or both to be represented in the display.

The storage 260 is a storing medium for storing various programs which may be required to operate the TV 200. The storage 260 can be implemented using a memory, a Hard Disk Drive (HDD), and so on.

The manipulator 270 receives the user's manipulation. In more detail, the manipulator 270 receives a user command from a manipulation means such as remote controller 290, via a user command receiver 275. Note that the manipulator 270 can receive the user's manipulation through a button (not shown) of the TV 200. The manipulator 270 forwards the received user manipulation to the controller 240.

The IR transmitter 280 generates the sync signal synchronized with the left-eye image and the right-eye image alternately output, and sends the generated sync signal to the shutter glasses 300 as the IR. As the shutter glasses 300 are opened and closed alternately, the left-eye image is displayed in the image output part 230 at the left-eye open timing of the shutter glasses 300 and the right-eye image is displayed in the image output part 230 at the right-eye open timing of the shutter glasses 300.

The controller 240 controls the operations of the TV 200 according to the user manipulation fed from the manipulator 270.

The controller 240 controls the image receiver 210 and the image processor 220 to receive the 3D image, to split the received 3D image into the left-eye image and the right-eye image, and to scale or interpolate the images to display the divided left-eye image and right-eye image in one screen respectively.

The controller 240 controls the GUI generator 250 to generate the GUI corresponding to the user's manipulation fed from the manipulator 270, and controls the IR transmitter 280 to generate and send the sync signal synchronized with the output timings of the left-eye image and the right-eye image.

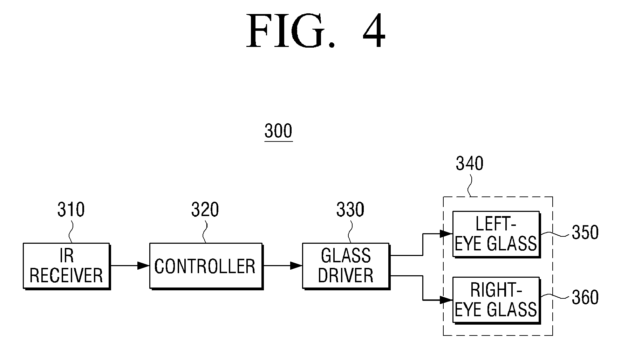

The shutter glasses 300 alternately open and close the left-eye glass and the right-eye glass according to the sync signal received from the TV 200 so that the user can view the left-eye image and the right-eye image through the left eye and the right eye. Hereafter, the structure of the shutter glasses 300 is provided in detail by referring to FIG. 4.

FIG. 4 is a block diagram of the shutter glasses 300 according to an exemplary embodiment of the present invention. The shutter glasses 300 include an IR receiver 310, a controller 320, a glass driver 330, and a glass part 340.

The IR receiver 310 receives the sync signal for the 3D image from the IR transmitter 380 of the TV 200 connected by wire or by wireless. The IR transmitter 280 emits the sync signal using the straight infrared ray, and the IR receiver 310 receives the sync signal from the emitted infrared ray.

For example, the sync signal sent from the IR transmitter 280 to the IR receiver 310 can be a signal which alternates the high level and the low level at preset time intervals, the left-eye image can be transmitted at the high level, and the right-eye image can be transmitted at the low level.

The IR receiver 310 forwards the sync signal received from the IR transmitter 280 to the controller 320.

The controller 320 controls the operations of the shutter glasses 300. The controller 320 generates a control signal based on the sync signal received at the IR receiver 310 and sends the generated control signal to the glass driver 330 to control the glass driver 330. Based on the sync signal, the controller 320 controls the glass driver 330 to generate a driving signal for driving the glass part 340.

The glass driver 330 generates the driving signal based on the control signal received from the controller 320. Since the glass part 340 includes a left-eye glass 350 and a right-eye glass 360, to be explained, the glass driver 330 generates the left-eye driving signal for driving the left-eye glass 350 and the right-eye driving signal for driving the right-eye glass 360, sends the generated left-eye driving signal to the left-eye glass 350, and sends the generated right-eye driving signal to the right-eye glass 360.

The glass part 340 includes the left-eye glass 350 and the right-eye glass 360 as stated above, and opens and closes the glasses according to the driving signal received from the glass driver 330.

### < 3D image

Referring now to FIGS. 5A, 5B and 5C, a method for generating the left-eye image and the right-eye image by processing the 3D image according to the 3D image format is illustrated.

FIGS. 5A, 5B and 5C are diagrams of a processing method based on the 3D image format. FIG. 5A depicts a method for displaying the 3D image received according to the general frame sequence scheme, on the screen.

As shown in FIG. 5A, the 3D image format according to the frame sequence scheme inserts one left-eye image or one right-eye image to one frame. Hence, the 3D image is input in the order of 'the frame including the left-eye image L1 filmed by the left-eye camera -> the frame including the right-eye image R1 filmed by the right-eye camera -> the frame including the left-eye image L2 filmed by the left-eye camera -> the frame including the right-eye image R2 filmed by the right-eye camera -> ...' and displayed on the screen in the input order.

FIG. 5B depicts a method for displaying the 3D image received in the side-by-side scheme, on the screen.

The 3D image format according to the side-by-side scheme includes both of the left-eye image and the right-eye image in one frame. In the 3D image format of the side-by-side scheme, the left-eye image and the right-eye image are divided horizontally, the left-eye image lies in the left side, and the right-eye image lies in the right side.

As for this format, the TV 200 horizontally bisects each frame of the received 3D image into the left-eye image and the right-eye image, horizontally upscales the divided left-eye image and right-eye image two times, and alternately displays the images on the screen.

In result, the 3D image is displayed on the screen in the order of 'the twice enlarged left-eye image of the left part (L1) of the image in the first frame -> the twice enlarged right-eye image of the right part (R1) of the image in the first frame -> the twice enlarged left-eye image of the left part (L2) of the image in the second frame the twice enlarged right-eye image of the right part (R2) of the image in the second frame -> ...'.

While the method for processing the 3D image format according to the side-by-side scheme has been exemplified, the processing of the 3D image format according to the top-bottom scheme can be inferred therefrom. In detail, the 3D image format of the top-bottom scheme is divided to the left-eye image and the right-eye image by applying the vertical upscaling, rather than the horizontal upscaling, and the divided left-eye image and right-eye image are output alternately, to thus represent the 3D image to the user.

FIG. 5C depicts a method for displaying the 3D image received according to the horizontal interleave scheme, on the screen.

The 3D image format of the horizontal interleave scheme includes both of the left-eye image and the right-eye image in one frame. In the 3D image format of the horizontal interleave scheme, the left-eye image and the right-eye image are alternated on the row basis.

In this format, the TV 200 splits to the left-eye image and the right-eye image by dividing each frame of the received 3D image based on the odd rows and the even rows, vertically upscales the split left-eye image and right-eye image two times, and then alternately displays the images on the screen.

Hence, the 3D image is displayed in the screen in the order of 'the twice enlarged left-eye image of the odd-row parts (L1-1 and L1-2) of the image in the first frame -> the twice enlarged right-eye image of the right parts (R1-1 and R1-2) of the image in the first frame -> the twice enlarged left-eye image of the left parts (L2-1 and L2-2) of the image in the second frame -> the twice enlarged right-eye image of the right parts (R2-1 and R2-2) of the image in the second frame -> ...'.

As for the 3D image format according to the horizontal interleave scheme, the left-eye image may be generated by interpolating the even rows using the odd rows of the image in one frame and the left-eye image may be generated by interpolating the odd rows using the even rows, without upscaling.

Without upscaling or interpolating, the left-eye image can be generated by outputting the image only for the odd rows and the right-eye image can be generated by outputting the image for the even rows.

So far, while the processing on the 3D image format of the horizontal interleave scheme has been described, the processing on the 3D image format of the vertical interleave scheme or the checkerboard scheme can be inferred therefrom.

That is, in the 3D image format of the vertical interleave scheme, the left-eye image and the right-eye image can be divided by applying the column based scaling or interpolating, rather than the row based scaling or interpolating, and the divided left-eye image and right-eye image can be alternately output to thus represent the 3D image to the user.

The 3D image format of the checkerboard scheme can use the scaling or the interpolating based on the pixel, or the scaling or the interpolating based on the pixel group.

### < 3D image providing method in 3D mode and in 2D

The 3D mode and the 2D mode are explained by referring to FIGS. 3 and 6 through 9B. First, the operations of the components of the TV 200 are elucidated in FIG. 3.

The TV 200 can operate the display mode in a 2D mode and in a 3D mode. Herein, the 2D mode is to display the 2D image. When the TV 200 is in the 2D mode, the image processor 220 of the TV 200 merely applies the general image processing to the input image and outputs the processed image to the image output part 230.

The 3D mode is to display the 3D image. When the TV 200 enters the 3D mode, the image processor 220 of the TV 200 generates the left-eye image and the right-eye image by processing the input image as shown in FIGS. 5A, 5B and 5C. To generate the left-eye image and the right-eye image, the image processor 220 applies one of the various 3D image formats. Next, the image processor 220 alternately outputs the left-eye image and the right-eye image to the image output part 230. As such, in the 3D mode, the TV 200 displays the image which is input to represent the 3D image.

When a particular manipulation is input via the manipulator 270 in the 2D mode, the controller 240 of the TV 200 checks whether the input image is the 2D image or the 3D image. Herein, the particular manipulation is to change the display mode either to the 2D mode or to the 3D mode. When the current display mode is the 2D mode, the particular manipulation changes the display mode to the 3D mode. When the current display mode is the 3D mode, the particular manipulation changes the display mode to the 2D mode.

More specifically, the particular manipulation can press a certain button (for example, a display mode change button) of the remote controller 290 which controls the TV 200. The particular manipulation can press a certain button (for example, a display mode change button) of the TV 200. The particular manipulation can select a specific item (for example, a display mode change item) in a menu displayed in the screen.

The controller 240 can detect whether the input image is the 2D image or the 3D image using header information of the input image. For example, the header information of the input image can include a tag relating to whether the input image is the 2D image or the 3D image.

The controller 240 may detect whether the input image is the 2D image or the 3D image by comparing the top and bottom parts and the left and right parts of the input image and determining whether there are similar images in the parts. For example, when the input image is the 3D image of the top & bottom scheme, the controller 240 compares the upper region and the lower region of the input image. As the upper region and the lower region are similar, the controller 240 detects the input image as the 3D image. As such, the controller 240 can detect whether the input image is the 2D image or the 3D image.

When the input image is the 3D image, the controller 240 controls to display the 3D image by changing the display mode to the 3D mode. That is, the controller 240 controls to display the input 3D image as the left-eye image and the right-eye image through the processing of FIGS. 5A, 5B and 5C.

When the input image is the 2D image, the controller 240 converts the input 2D image to the 3D image. The controller 240 converts to the 3D image by duplicating the 2D image, processing to represent the stereoscopy, and generating the left-eye image and the right-eye image. Besides, the controller 240 converts the input 2D image to the 3D image including the left-eye image and the right-eye image using various schemes. In so doing, the controller 240 converts the 2D image to the 3D image in the format supportable by the TV 200.

Next, the controller 240 controls to display the converted 3D image by switching the display mode to the 3D mode.

When a particular manipulation is input again in the 3D mode through the manipulator 270, the controller 240 changes the display mode to the 2D mode. That is, the particular manipulation toggles to switch the 3D mode and the 2D mode.

As such, the TV 200 can control to display the input image in the 3D mode through the single particular manipulation, regardless of whether the input image is the 2D image or the 3D image. Thus, the user can enter the 3D mode by inputting one particular manipulation and view the 3D image without having to know whether the type of the input image is the 2D image or the 3D image.

FIG. 6 is a flowchart of a 3D image providing method according to an exemplary embodiment of the present invention.

The TV 200 enters the 2D mode (S610) and receives the image (S620). Next, the TV 200 displays the input image in the 2D mode.

The TV 200 detects whether a particular manipulation is input (S630). When the particular manipulation is input (S630-Y), the TV 200 detects the type of the input image (S640). In more detail, the TV 200 detects whether the input image is the 2D image or the 3D image. Herein, the particular manipulation is to switch the display mode to one of the 2D mode and the 3D mode. When the current display mode is the 2D mode, the particular manipulation changes the display mode to the 3D mode. When the current display mode is the 3D mode, the particular manipulation changes the display mode to the 2D mode.

More specifically, the particular manipulation can press a certain button (for example, a display mode change button) of the remote controller 290 which controls the TV 200. The particular manipulation can press a certain button (for example, a display mode change button) of the TV 200. The particular manipulation can select a specific item (for example, a display mode change item) in the menu displayed in the screen.

Using the header information of the input image, the TV 200 can detect whether the input image is the 2D image or the 3D image (S640 and S650). For example, the header information of the input image can include the tag relating to whether the input image is the 2D image or the 3D image.

The TV 200 may detect whether the input image is the 2D image or the 3D image by comparing the upper and lower parts and the left and right parts of the input image and determining whether there are similar images in the parts. For example, when the input image is the 3D image of the top & bottom scheme, the TV 200 compares the upper region and the lower region of the input image. As the upper region and the lower region are similar, the TV 200 detects the input image as the 3D image. As such, the TV 200 can detect whether the input image is the 2D image or the 3D image.

When the input image is the 3D image (S650-Y), the TV 200 changes the display mode to the 3D mode (S660).

When the input image is the 2D image (S650-N), the TV 200 converts the input 2D image to the 3D image (S655). For example, the TV 200 converts to the 3D image by duplicating the 2D image, processing to represent the stereoscopy, and generating the left-eye image and the right-eye image. Besides, the TV 200 converts the input 2D image to the 3D image including the left-eye image and the right-eye image using various schemes. In so doing, the TV 200 converts the 2D image to the 3D image in the format supportable by the TV 200.

Next, the TV 200 switches the display mode to the 3D mode (S660) and displays the converted image in the 3D mode (S670). That is, the TV 200 displays the input 3D image as the left-eye image and the right-eye image through the processing of FIGS. 5A, 5B and 5C.

The TV 200 detects whether the particular manipulation is input again in the 3D mode via the manipulator 270 (S680). When receiving no particular manipulation (S680-N), the TV 200 keeps displaying the input image in the 3D mode (S670).

By contrast, when receiving the particular manipulation (S680-Y), the TV 200 switches the display mode to the 2D mode (S690). That is, the particular manipulation toggles to switch the 3D mode and the 2D mode. Next, the TV 200 displays the input image in the 2D mode (S695).

As such, the TV 200 can display the input image in the 3D mode through the single particular manipulation, regardless of whether the input image is the 2D image or the 3D image. Thus, the user can enter the 3D mode by inputting the single particular manipulation and view the 3D image without having to know whether the type of the input image is the 2D image or the 3D image.

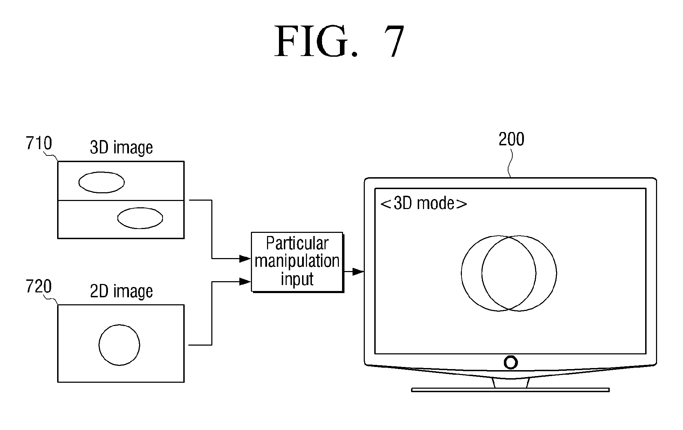

FIG. 7 depicts the display of the 3D image and the 2D image on the screen in the 3D mode according to an exemplary embodiment of the present invention. As shown in FIG. 7, when the input image is the 3D image and the particular manipulation is input, the TV 200 enters the 3D mode and displays the input 3D image in the 3D mode. When the input image is the 2D image and the same particular manipulation is input, the TV 200 enters the 3D mode and displays the input 2D image in the 3D mode.

In the related art method, when the input images are the 2D image and the 3D image, the manipulations for switching to the 3D mode are different. Thus, the user needs to acquire whether the input image is the 2D image or the 3D image and then to manipulate accordingly. However, an exemplary embodiment of the present invention can execute the 3D mode through the single particular manipulation when the input images are the 2D image and the 3D image. Hence, the user can execute the 3D mode without checking whether the input image is the 2D image or the 3D image.

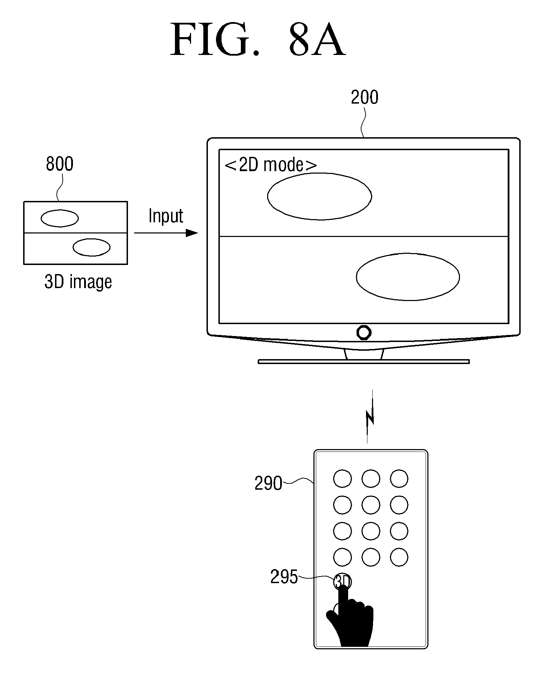

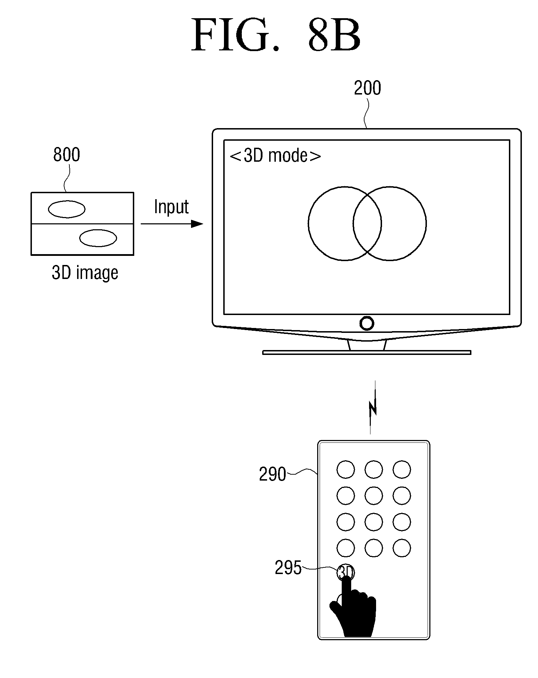

FIGS. 8A and 8B show the manipulation to display the input 3D image in the 2D mode and in the 3D mode according to an exemplary embodiment of the present invention.

In FIG. 8A, the input image is the 3D image 800 and the display mode of the TV 200 is the 2D mode. When the 3D image 800 is input in the 2D mode, the TV 200 displays the input 3D image as it is in the screen without creating the 3D image as shown in FIG. 8A. In result, the 3D image 800 of the top & bottom scheme is displayed in the screen.

In doing so, when the user presses the display mode change button 295 of the remote controller 290, the TV 200 switches the display mode to the 3D mode. The TV 200 detects the input image as the 3D image and displays the 3D image 800 in the 3D mode without a separate conversion.

In FIG. 8B, the input image is the 3D image 800 and the display mode of the TV 200 is the 3D mode. When the 3D image 800 is input, the TV 200 displays the input 3D image 800 in the 3D mode as shown in FIG. 8B.

In doing so, when the user presses the display mode change button 295 of the remote controller 290, the TV 200 returns the display mode to the 2D mode. That is, the display mode change button 295 is the button for toggling the 2D mode and the 3D mode.

As above, when the 3D image 800 is input, the user can switch the display mode to the 2D mode and the 3D mode using the display mode change button 295.

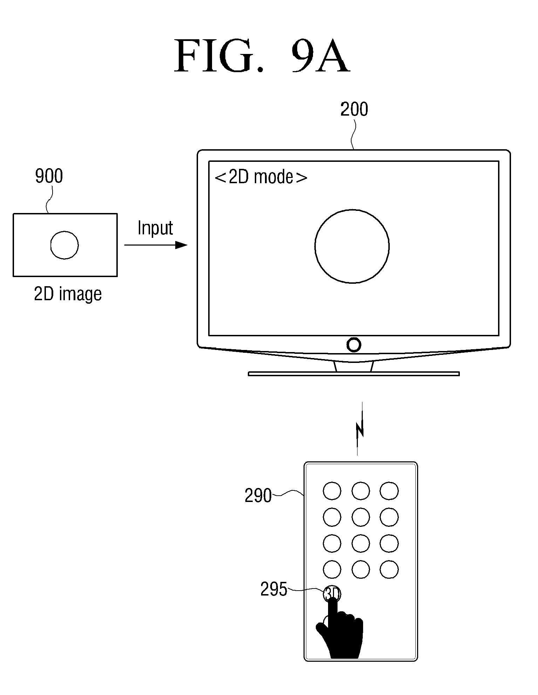

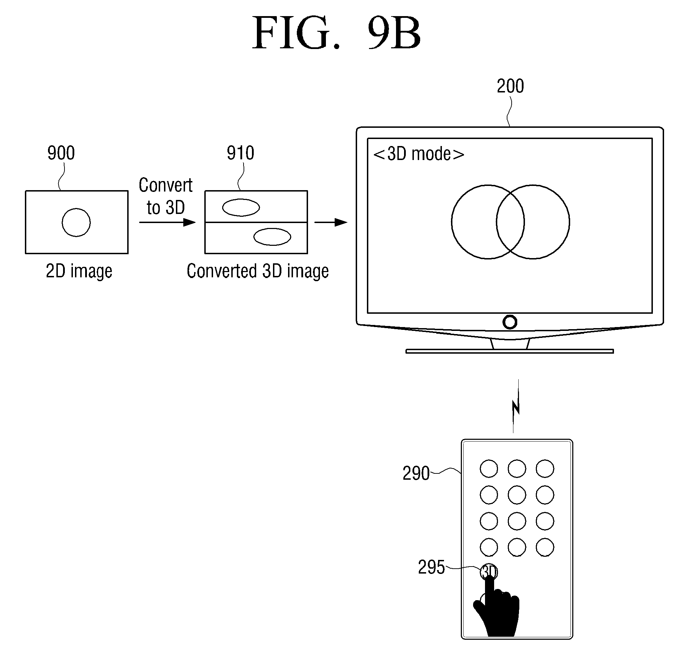

FIGS. 9A and 9B show the manipulations to display the input 2D image 900 in the 2D mode and in the 3D mode according to an exemplary embodiment of the present invention.

In FIG. 9A, the input image is the 2D image 900 and the display mode of the TV 200 is the 2D mode. When the 2D image 900 is input in the 2D mode, the TV 200 displays the input 2D image as it is in the screen as shown in FIG. 8A. In result, the 2D image 900 is displayed in the screen.

In doing so, when the user presses the display mode change button 295 of the remote controller 290, the TV 200 switches the display mode to the 3D mode. The TV 200 detects the input image as the 2D image 900 and converts the input 2D image 900 to the 3D image 910 as shown in FIG. 9B. In FIG. 9B, the TV 200 converts the input 2D image 900 to the 3D image 910 of the top & bottom format.

Next, the TV 200 displays the converted 3D image 910 in the 3D mode as shown in FIG. 9B.

In doing so, when the user presses the display mode change button 295 of the remote controller 290, the TV 200 returns the display mode to the 2D mode. That is, the display mode change button 295 is the button for toggling the 2D mode and the 3D mode.

As above, even when the 2D image 900 is input, the user can switch the display mode to the 2D mode and the 3D mode using the same display mode change button 295.

Regardless of whether the input image is the 2D image or the 3D image, the TV 200 can display the input image in the 3D mode using the single display mode change button 295. Thus, the user can execute the 3D mode by pressing the single display mode change button 295 and view the 3D image, without having to know whether the input image type is the 2D image or the 3D image.

While the 3D mode is executed by manipulating the display mode change button 295 of the remote controller 290 by way of example, the an exemplary embodiment of present invention can adopt any manipulation for switching to the 3D mode. For example, the particular manipulation can press a certain button of the TV 200, and select a specific item in the menu displayed in the TV 200.

While the display apparatus is exemplified as the TV, an exemplary embodiment of the present invention can employ any apparatus capable of displaying the 3D image. For example, the display apparatus can be a 3D monitor, a 3D image projector, and so forth.

### < Method for providing the 3D image by automatically determining the

Now, a method for providing the 3D image by automatically determining the format is illustrated by referring to FIGS. 10 through 13.

FIG. 10 is a detailed block diagram of a 3D TV 1000 according to an exemplary embodiment of the present invention. The 3D TV 1000 of FIG. 10 includes a broadcast receiver 1010, an image input part 1020, an A/V processor 1030, an audio output part 1040, an image output part 1050, a controller 1060, a storage 1070, a manipulator 1080, and a glass signal transceiver 1095.

The broadcast receiver 1010 receives and demodulates the broadcast from the broadcasting station or the satellite by wire or by wireless. The broadcast receiver 1010 also receives a 3D image signal including 3D image data.

The image input part 1020 is connected to an external device and receives the image. In particular, the image input part 1020 can receive the 3D image data from the external device. The image input part 1020 can interface with, for example, S-Video, Component, Composite, D-Sub, DVI, and HDMI.

Herein, the 3D image data indicates the data including 3D image information. The 3D image data includes left-eye image data and right-eye image data in one data frame region. Based on the format including the left-eye image data and the right-eye image data, the type of the 3D image data is classified.

The A/V processor 1030 performs the signal processing such as video decoding, video scaling, and audio decoding and generates the GUI with respect to the image signal and the audio signal fed from the broadcast receiver 1010 and the image input part 1020.

When the input image and audio signals are stored to the storage 1070, the A/V processor 1030 compresses the input image and audio to store the compressed image and audio.

The A/V processor 1030 includes an audio processor 1032, an image processor 1034, a 3D image creator 1036, and a GUI generator 1038 as shown in FIG. 10.

The audio processor 1032 processes, for example, decodes the audio of the input audio signal. The audio processor 1032 outputs the processed audio signal to the audio output part 1040.

The image processor 1034 processes the input image signal, for example, decodes and scales the video. When the 3D image data is input, the image processor 1034 outputs the input 3D image data to the 3D image creator 1036.

The 3D image creator 1036 generates the left-eye image and the right-eye image interpolated to the size of the screen, using the input 3D image data. To create the 3D stereoscopic image, the 3D image creator 1036 generates the left-eye image and the right-eye image to display in the screen.

More specifically, the 3D image creator 1036 separates the left-eye image data and the right-eye image data from the input 3D image data. Since one frame data includes both of the left-eye image data and the right-eye image data, the left-eye image data and the right-eye image data separated each contain the image data corresponding to the half of the whole screen size. Accordingly, the 3D image creator 1036 generates the left-eye image and the right-eye image to be displayed in the full screen by enlarging twice or interpolating the separated left-eye image data and right-eye image data. Next, the 3D image creator 1036 outputs the generated left-eye image and right-eye image to the image output part 1050 to display them in alternation.

The GUI generator 1038 can generate the GUI for the environment setting of the 3D TV 1000. The generated GUI can include an icon indicating the 3D mode or the 2D mode, a switch icon of the 3D mode and the 2D mode, and data information of the input 3D image.

In more detail, the GUI generator 1038 generates the GUI including a menu for the display setting of the input 3D image and information of the 3D image currently displayed. The menu for the display setting of the 3D image includes a menu for setting whether to display the input 3D image in the 3D mode or in the 2D mode, and for setting the format of the input 3D image. Herein, the 3D mode indicates a mode which represents the stereoscopic image by alternately displaying the left-eye image and the right-eye image of the 3D image according to the corresponding format. The 2D mode is a mode which represents the image without the stereoscopy to display the 2D image without the stereoscopy.

The audio output part 1040 outputs the audio fed from the A/V processor 1030 to a speaker.

The image output part 1050 outputs the image output from the A/V processor 1030 to display the image in the screen. As for the 3D image, the image output part 1050 alternately outputs the left-eye image and the right-eye image onto the screen.

The storage 1070 stores the image received from the broadcast receiver 1010 or the image input part 1020. The storage 1070 can be implemented using a hard disk, a nonvolatile memory, and so on.

The manipulator 1080 receives and forwards the user's manipulation to the controller 1060. The manipulator 1080 can be implemented using a remote controller, a pointing device, a touchpad, and a touch screen.

The glass signal transceiver 1095 sends a clock signal to alternately open the left-eye glass and the right-eye glass of the 3D glasses 1090. The 3D glasses 1090 alternately open the left-eye glass and the right-eye glass according to the received clock signal. The glass signal transceiver 1095 receives status information from the 3D glasses 1090.

The controller 1060 acquires the user command based on the manipulation of the user fed from the manipulator 1080, and controls the operations of the TV according to the acquired user command.

When the 3D image is input through the image input part 1010, the controller 1060 controls the A/V processor 1030 to display the input 3D image in the 3D mode. As for the display mode of the input 3D image, when the 3D image is input, the controller 1060 can display the input 3D image in the 3D mode not only automatically but also according to the user's manipulation via the manipulator 1080.

As for the format of the 3D image, the controller 1060 determines the format of the 3D image according to the user's manipulation fed from the manipulator 1080 and controls to display the 3D image. Notably, the 3D image format can be determined not only automatically but also according to the user's manipulation via the manipulator 1080.

the controller 1060 controls the A/V processor 1030 to display the input 3D image as the 2D image. Likewise, the A/V processor 1030 can be controlled not only automatically but also according to the user's manipulation via the manipulator 1080.

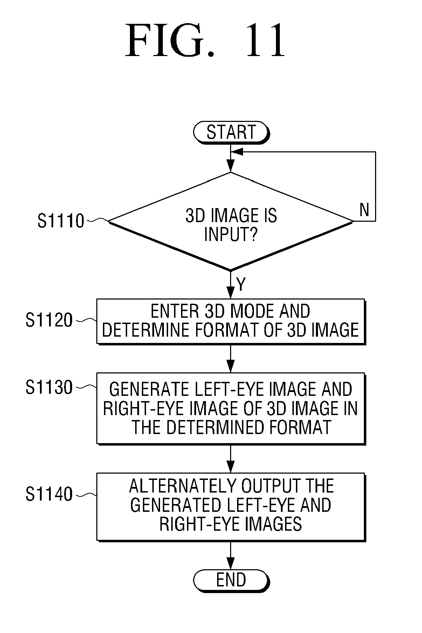

Hereafter, the 3D image providing method is elucidated by referring to FIG. 11.

FIG. 11 is a flowchart of the 3D image providing method according to an exemplary embodiment of the present invention.

The 3D TV 1000 determines whether the 3D image is input (S1110). When no 3D image is input (S1110-N), the 3D TV 1000 waits until the 3D image is input.

When the 3D image is input (S1110-Y), the 3D TV 1000 changes to the 3D mode to display the input 3D image in the 3D mode, and determines the format of the input 3D image (S1120). Herein, the 3D mode is the mode for representing the stereoscopic image by alternately displaying the left-eye image and the right-eye image of the 3D image according to the corresponding format.

Next, the 3D TV 1000 generates the left-eye image and the right-eye image of the 3D image based on the determined format (S1130), and alternately outputs the generated left-eye image and right-eye image through the image output part 1050 (S1140). Thus, the 3D TV 1000 can provide the stereoscopic image to the user.

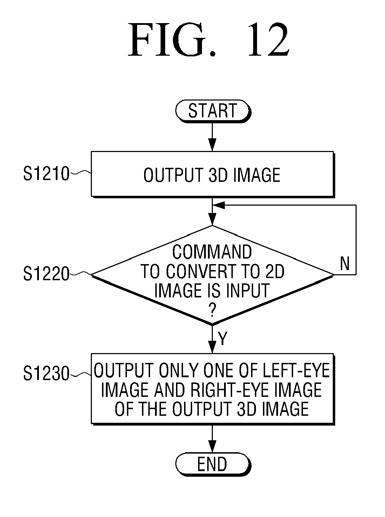

Now, a 3D image providing method according to another exemplary embodiment of the present invention is provided by referring to FIG. 12.

By alternately outputting the left-eye image and the right-eye image of the 3D image, the stereoscopic image is represented to the user. While the 3D image is output (S1210), when the command instructing to convert to the 2D image is input (S1220-Y), the 3D TV 1000 outputs only one of the left-eye image and the right-eye image (S1230). In result, the user perceives only one of the output left-eye image and right-eye image, in the left eye and the right eye and thus views the 2D image without the illusion of the depth.

When the conversion command to the 2D image is not input (S1220-N), the 3D TV 1000 outputs the 3D image as it is.

In this another exemplary embodiment, the method for outputting the input 3D image as the 2D image outputs either the left-eye image or the right-eye image, which is a mere example. Alternatively, the 2D image can be realized by matching and displaying the left-eye image and the right-eye image, or by dividing the image region to output and alternately displaying the left-eye image and the right-eye image including the divided regions.

In this another exemplary embodiment, the conversion to the 2D image may be instructed by the user's command through the manipulator 1080 and by the manipulation or the state of the 3D glasses 1090. For instance, when the user takes off the 3D glasses 1090, the 3D TV 1000 can be set to automatically convert the image to the 2D image. Note that the conversion is not limited to this example in other various exemplary embodiments.

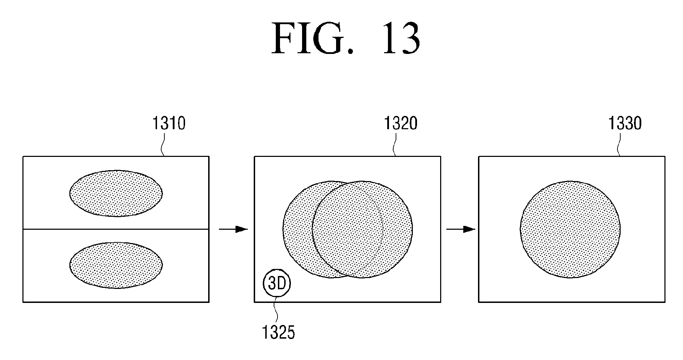

A 3D image providing method according to yet another exemplary embodiment of the present invention is provided by referring to FIG. 13.

FIG. 13 depicts the method for displaying the input 3D image as the 2D image according to yet another exemplary embodiment of the present invention.

As described earlier, the 3D image data includes the left-eye image and the right-eye image, and its formats include the side-by-side scheme, the top & bottom scheme, the 2D+DEPTH scheme, the horizontal interleave scheme, the vertical interleave scheme, and the checkerboard scheme based on the pattern including the left-eye image and the right-eye image. To ease the understanding, explanations are confined to the top & bottom scheme.

The input 3D image includes the left-eye image and the right-eye image, the upper part of the frame includes the left-eye image, and the lower part of the frame includes the right-eye image (1310). Conversely, the upper part of the frame can include the right-eye image and the lower part of the frame can include the left-eye image.

When the 3D image is input, the corresponding format is determined and automatically displayed in the 3D mode (1320). The display window shows information relating to whether the image currently displayed is in the 3D mode or in the 2D mode. When the current image is displayed in the 3D mode, a mark '3D' 1325 is displayed as shown in FIG. 13.

Next, when the user inputs the command instructing to convert the corresponding image to the 2D image, the 3D TV 1000 displays the input 3D image as the 2D image (1330). In detail, the 3D TV 1000 displays the input 3D image as the 2D image by outputting either the left-eye image or the right-eye image.

While the displayed information is confined to, but not limited to, the information relating to the 3D mode, the displayed information may include a menu for converting to the 2D image.

So far, the method for automatically displaying the input 3D image in the 3D mode and the method for converting and outputting the 3D image to the 2D image have been described by referring to FIGS. 10 through 13. The user can not only view the 3D image more easily rapidly but also select whether to view the 3D image as the 2D image.

### < Method for providing the 3D image by automatically determining the

Hereafter, a method for changing from the 2D image mode to the 3D image mode is illustrated by referring to FIGS. 14 through 16B.

FIG. 14 is a detailed block diagram of the 3D TV 1400 according to an exemplary embodiment of the present invention. The 3D TV 1400 of FIG. 14 includes a broadcast receiver 1410, an image input part 1420, an A/V processor 1430, an audio output part 1440, an image output part 1450, a controller 1460, a storage 1470, a manipulator 1480, and a glass signal transceiver 1495.

The components of FIG. 14, except for the controller 1460, function the same as in FIG. 10. Hence, only the controller 1460 in FIG. 14 is explained.

The controller 1460 acquires the user command based on the user's manipulation fed from the manipulator 1480, and controls the TV 1400 according to the acquired user command.

According to the user's manipulation fed from the manipulator 1480, the controller 1460 sets whether to automatically determine the 3D image format. When the user sets to automatically determine the input 3D image format through the manipulator 1480, the controller 1460 controls to automatically determine the format of the input 3D image. When the user sets not to automatically determine the 3D image format through the manipulator 1480, the controller 1460 controls to select the format of the input 3D image through the manipulator 1480.

When the automatic determination of the format of the input 3D image is set, the controller 1460 analyzes the format of the input 3D image. Based on the analysis, the controller 1460 automatically determines the 3D image format suitable for the format of the input 3D image. The controller 1460 also controls to display a 3D image format automatic determination message to the image output part 1450. Herein, the 3D image format automatic determination message notifies that the 3D image is being automatically determined in the screen.

When the automatic determination of the format of the input 3D image is not set, the controller 1460 controls to display a 3D image format manual selection menu in the image output part 1450. Herein, the 3D image format manual selection menu is a menu for the user to select the format of the 3D image. When the user selects one format in the 3D image format manual selection menu through the manipulator 1480, the controller 1460 controls to display the 3D image of the selected format.

While the automatic determination of the 3D image format is set, when an execution command of the 3D image format manual selection menu is input via the manipulator 1480, the controller 1460 controls to display the 3D image format manual selection menu. When the 3D image format manual selection menu is executed even after the automatic determination is set, the user wants to select a new format because he/she cannot clearly view the 3D image in the automatically determined format.

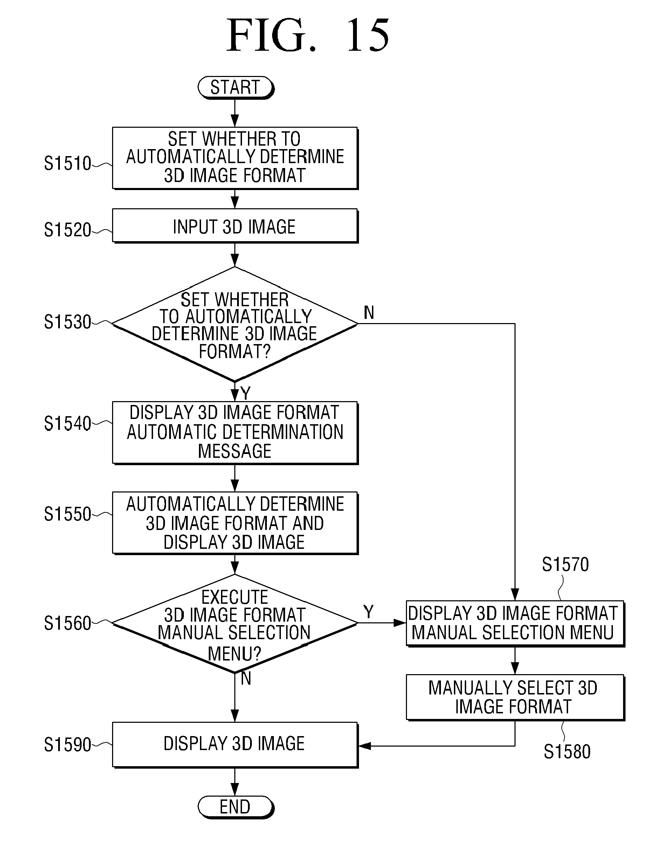

Now, a 3D image converting method of the 3D TV 1400 is elucidated by referring to FIGS. 15 through 16B.

FIG. 15 is a flowchart of a 3D image converting method according to an exemplary embodiment of the present invention.

The 3D TV 1400 sets whether to automatically determine the format of the input 3D image according to the user's manipulation (S1510). The 3D TV 1400 receives the 3D image (S1520).

According to the setting in S1510, the 3D TV 1400 determines whether to automatically determine the format of the input 3D image (S1530). When setting to automatically determine the format of the input 3D image (S1530-Y), the 3D TV 1400 displays the 3D image format automatic determination message (S1540).

Next, the 3D TV 1400 automatically determines the format of the input 3D image and displays the input 3D image in the determined format (S1550). More specifically, the 3D TV 1400 analyzes the format of the input 3D image. The 3D TV 1400 can analyze the format of the 3D image by using the tag information of the input 3D image or by comparing the upper and lower images and the left and right images of the input 3D image. Based on the analysis, the 3D image creator 1436 generates the left-eye image and the right-eye image corresponding to the format of the input 3D image. By alternately outputting the generated left-eye image and right-eye image through the image output part 1450, the 3D image is displayed.

When not set to automatically determine the format of the input 3D image (S1530-N), the 3D TV 1400 displays the 3D image format manual selection menu to manually select the 3D image format (S1570). By the user's manipulation, the input 3D image format is manually selected (S1580). Based on the selection, the 3D image creator 1436 generates the left-eye image and the right-eye image corresponding to the format of the input 3D image. By alternately outputting the generated left-eye image and right-eye image through the image output part 1450, the 3D TV 1400 displays the 3D image (S1590).

Upon automatically determining the 3D image format, the 3D TV 1400 determines whether to execute the 3D image format manual selection menu (S1560). When the 3D image format manual selection menu is not executed without any manipulation of the user (S1560-N), the 3D TV 1400 does not execute the 3D image format manual selection menu and keeps displaying the 3D image in the current format automatically determined (S1590). Herein, the 3D image format manual selection menu is not executed when the user can clearly see the 3D image in the automatically determined format and thus does not need a separate manipulation.

When the 3D image format manual selection menu is executed through the user's manipulation even after the 3D image format is automatically determined, the 3D TV 1400 executes the 3D image format manual selection menu and manually re-selects the format of the input 3D image (S1560-Y). Herein, the 3D image format manual selection menu is executed when the user can not clearly see the 3D image in the automatically determined format and thus needs to select a new format.

As such, by automatically determining or manually selecting the format of the input 3D image, the user can find the format of the 3D image more easily and accurately.

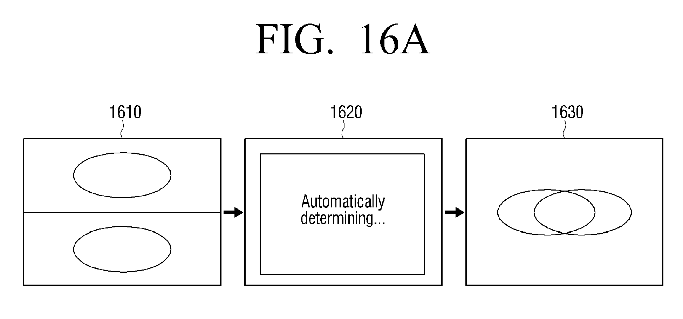

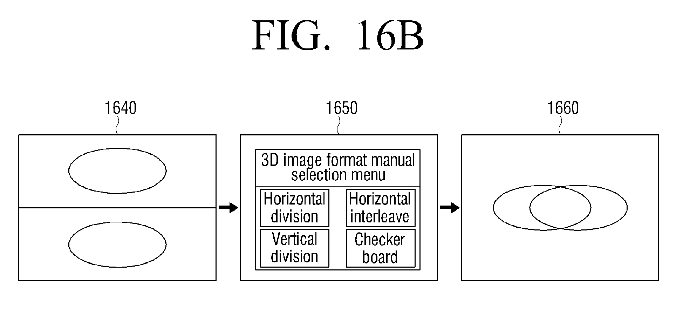

Following explanations detail the 3D image converting method of the 3D TV 1400 by referring to FIGS. 16A and 16B.

FIG. 16A depicts the process for automatically determining the format when the automatic determination of the 3D image format is set according to an exemplary embodiment of the present invention.

The 3D image of the vertically divided pattern is input as shown in FIG. 16A (1610). The controller 1460 analyzes the format of the input 3D image. While the controller 1460 analyzes the 3D image format, the 3D TV 1400 displays a message 'automatically determining ...' through the image output part 1450 (1620).

When the controller 1460 analyzes the input image as the vertically divided pattern, the 3D image creator 1436 generates the left-eye image and the right-eye image corresponding to the 3D image of the vertically divided pattern. Next, the image output part 1450 outputs the 3D image by alternately displaying the generated left-eye image and right-eye image (1630).

FIG. 16B depicts a process for manually selecting the format when the manual selection of the 3D image format is set according to an exemplary embodiment of the present invention.

The 3D image of the top-bottom scheme is input as shown in FIG. 16B (1640). To allow the user to select the format of the input 3D image, the 3D TV 1400 generates the 3D image format manual selection menu (1650).

When the format of the input 3D image is manually selected by the user's manipulation, the 3D image creator 1436 generates the left-eye image and the right-eye image corresponding to the user's selection. For example, when the user selects the vertical division scheme, the 3D image creator 1436 generates the left-eye image and the right-eye image corresponding to the 3D image of the top-bottom scheme. Next, the image output part 1450 outputs the 3D image by alternately displaying the generated left-eye image and right-eye image (1660).

Thus, when the 3D image is input, it is possible to set whether or not to automatically determine the 3D image format. Consequently, the user can find the format of the input 3D image more easily and accurately.

### < GUI providing method based on the 3D mode

A GUI providing method based on the 3D mode change is described by referring to FIGS. 17 through 20.

The 3D providing system of FIGS. 1 through 4 is referred to.

FIG. 17 is a diagram of the screen when the 3D image is received.

Upon receiving the 3D image, the TV 200 automatically analyzes the format to apply to the received 3D image, processes the 3D image according to the analyzed format, and displays the processed 3D image in the screen. For instance, when the received 3D image is generated in the top-bottom scheme, the TV 200 can acquire the format to apply to the received image using the format information added to the received 3D image.

Upon acquiring the format to apply to the received 3D image, the TV 200 applies this format to the received 3D image, extracts the left-eye image part and the right-eye image part from the 3D image, generates the left-eye image and the right-eye image by vertically upscaling the extracted left-eye image and right-eye image parts, and controls to alternately display the generated left-eye image and right-eye image time-divided.

FIG. 17 depicts a 3D object 1710 overlapping the original left-eye image and the original right-eye image to graphically represent the 3D image time-divided and alternately displayed.

In the screen, a GUI 1720 for guiding the setting change of the 3D image is automatically added together with the 3D object 1710.

The GUI 1720 includes an item set 1730 for changing the various settings. The item set 1730 includes an item for changing the format, an item for converting to the 2D image, an item for changing the output order of the left-eye image and the right-eye image of the 3D image, and an item for changing the output state of the 3D image.

By selecting one of the item for changing the format, the item for converting to the 2D image, the item for changing the output order of the left-eye image and the right-eye image of the 3D image, and the item for changing the output state of the 3D image, the user can change the format of the 3D image, convert the 3D image to the 2D image, change the output order of the 3D image, or change the output state of the 3D image.

The format change indicates the change to the format based on one of the frame sequence scheme, the top-bottom scheme, the side-by-side scheme, the horizontal interleave scheme, the vertical interleave scheme, and the checkerboard scheme as mentioned above.

The 2D mode displays the received 3D image in the 2D. To display the 3D image in the 2D mode, only the left-eye images or only the right-eye images are displayed, rather than time-dividing and alternately displaying the left-eye image and the right-eye image. Thus, the 2D image without the illusion of the depth is displayed.

The output order outputs the left-eye image and the right-eye image of one image frame in the order of 'the left-eye image -> the right-eye image' or 'the right-eye image -> the left-eye image'.

The output state indicates whether the 3D image is output when the 3D mode is turned on or when the 3D mode is turned off.

The ON state of the 3D mode separates each image frame of the input 3D image into the left-eye image part and the right-eye image part according to the applied format, generates the left-eye image and the right-eye image by upscaling the separated left-eye image and right-eye image parts, time-divides and alternately displays the left-eye image and the right-eye image.

By contrast, the OFF state of the 3D mode displays each image frame of the input 3D image as it is. In this case, when the 3D image is formatted in the other scheme than the frame sequence scheme, the left-eye image and the right-eye image are displayed at the same time.

Around the items of the item set 1730, color information for guiding the item selection is added as information relating to buttons required to select the items. The color information can be represented as texts R, G, Y and B as shown in FIG. 17, or in the actual colors.

Hence, the user can give the command for the format change to the TV 200 by pressing the R-button of a front panel of the TV 200 or the R-button of the remote controller 290. When receiving the command to change the format, the GUI 1720 for guiding the various settings is changed to a GUI for changing the format.

In addition, the user can transit to the 2D mode by pressing the G-button of the front panel of the TV 200 or the remote controller 290, change the output order by pressing the Y-button, and turn off the 3D mode by pressing the B-button.

Information indicating the 3D image represented and an item for stopping the display of the GUI 1720 can be provided above or below the item set 1730.

As such, when the 3D image is received, the format to apply to the 3D image is automatically analyzed and applied and the GUI 1720 for guiding the various settings of the 3D image is displayed. Thus, the user can change the various settings of the 3D image more easily and simply.

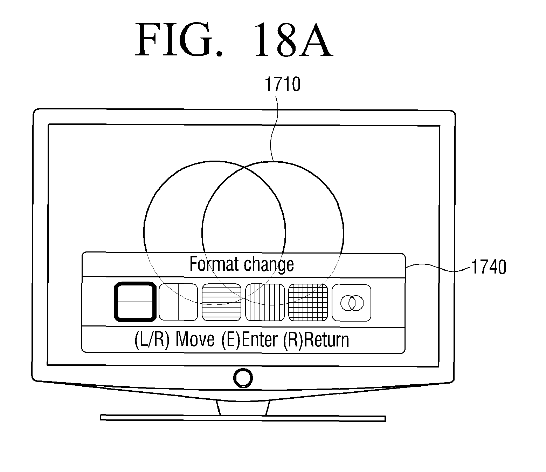

FIGS. 18A through 18D depict screens in which the item of the GUI is selected and the GUI is changed.

When the user presses the R-button of the TV 200 or the remote controller 290, the screen of FIG. 17 is changed to the screen of FIG. 18A. That is, when the R-button is pressed, the 3D object 170 remains in the screen and the GUI 1740 relating to the items for the formats to apply to the 3D image is displayed.

The item 1740 for the format indicates one of the general frame sequence scheme, the top-bottom scheme, the side-by-side scheme, the horizontal interleave scheme, the vertical interleave scheme, and the checkerboard scheme as mentioned above. The item 1740 for the format indicates, from the left to the right, the formats based on the top-bottom scheme, the side-by-side scheme, the horizontal interleave scheme, the vertical interleave scheme, the checkerboard scheme, and the frame sequence scheme.

When the user manipulates left and right manipulation buttons of the front panel of the TV 200 or left and right manipulation buttons of the remote controller 290, the format for processing the received 3D image points the top-bottom scheme -> the side-by-side scheme -> the horizontal interleave scheme -> the vertical interleave scheme -> the checkerboard scheme -> the frame sequence scheme or conversely.

That is, the item 1740 for the format not only points the format currently applied to the 3D image but also changes the format of the 3D image.

Meanwhile, in the GUI 1740, information indicative of the format changed state and items for guiding the vertical manipulation, the selection manipulation, and the return manipulation of the user can be added above or below the item 1740 for the format, and the format currently applied to the 3D image can be highlighted.

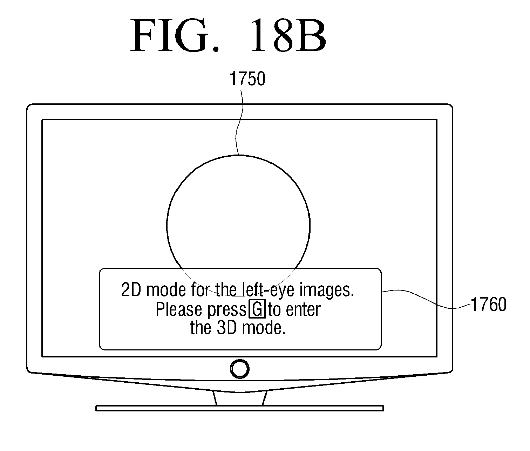

When the user presses the G-button of the TV 200 or the remote controller 290, the screen of FIG. 17 is changed to the screen of FIG. 18B. When the G-button is pressed, the 3D object 1710 disappears from the screen and only a 2D object 1750 according to the 2D image appears in the screen.

As stated earlier, the 2D object 1750 corresponds to one of the object in the left-eye image and the object in the right-eye image.

Under the 2D object 1750, information notifies that the current screen is based on the 2D mode and instructs to press the G-button to return to the 3D mode. That is, this information guides the user to view the 3D image by pressing the G-button.

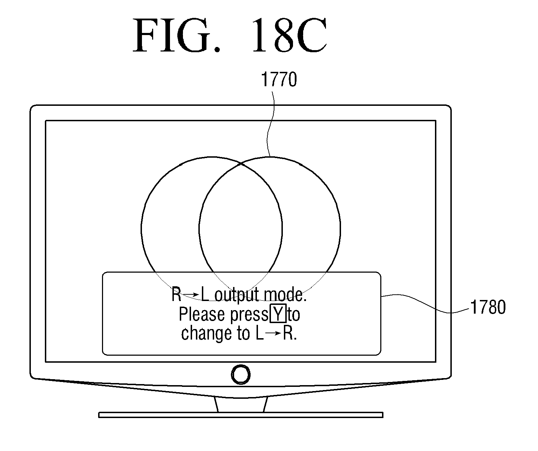

When the user presses the Y-button of the TV 200 or the remote controller 290, the screen of FIG. 17 is altered to the screen of FIG. 18C. When the Y-button is pressed, the 3D object 1710 disappears from the screen and the screen is displayed with the changed output order of the 3D image. Hence, the 3D object 1770 can differ from the previous object of the unchanged output order.

Under the 3D object 1770, information notifies that the current screen is displayed in the order of 'the right-eye image -> the left-eye image' and that the Y-button is to be pressed to return to the order of 'the left-eye image -> the right-eye image'. This information guides the user to press the Y-button and view the image displayed in the order of 'the left-eye image -> the right-eye image'.

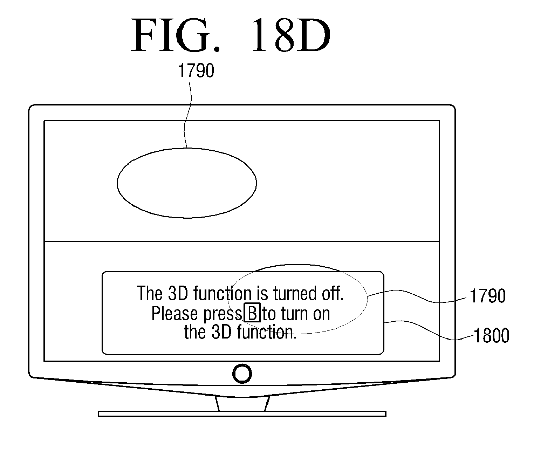

When the user presses the B-button of the TV 200 or the remote controller 290, the screen of FIG. 17 is altered to the screen of FIG. 18D. When the B-button is pressed, the 3D object 1710 disappears from the screen and a 2D object 1790 is displayed instead in the screen. Unlike the object in the screen in the 2D mode, the 2D object 1790 is displayed in the screen when the 3D mode is turned off.

In other words, each image frame of the input 3D image is displayed as it is, rather than one of the object in the left-eye image and the object in the right-eye image. When the 3D image is formatted according to other scheme than the frame sequence scheme, both of the object in the left-eye image and the object in the right-eye image are displayed.

Under the 2D object 1790, information notifies that the current 3D function is turned off and that the B-button is to be pressed to turn on the 3D function. This information guides the user to switch the 3D mode from the OFF state to the ON state by pressing the B-button.

Hence, it is possible to change the various settings of the 3D image more easily and simply.

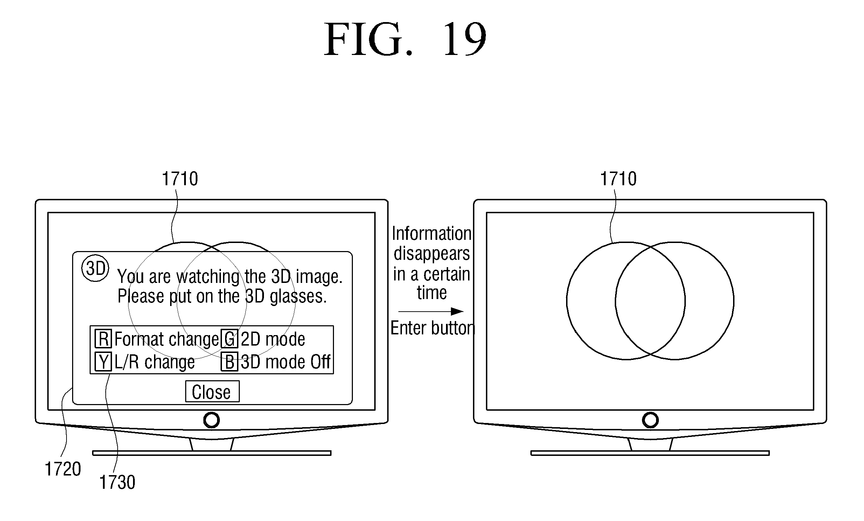

FIG. 19 shows the screen change when there is no user's manipulation. When the 3D image is received, the GUI 1720 for guiding the various setting change of the 3D image is automatically added together with the 3D object 1710. Next, when no command is input from the user at all, the GUI 1720 obstructing the view automatically disappears.

By pressing a particular button such as ENTER-button, the user can manually make the GUI 1720 disappear.

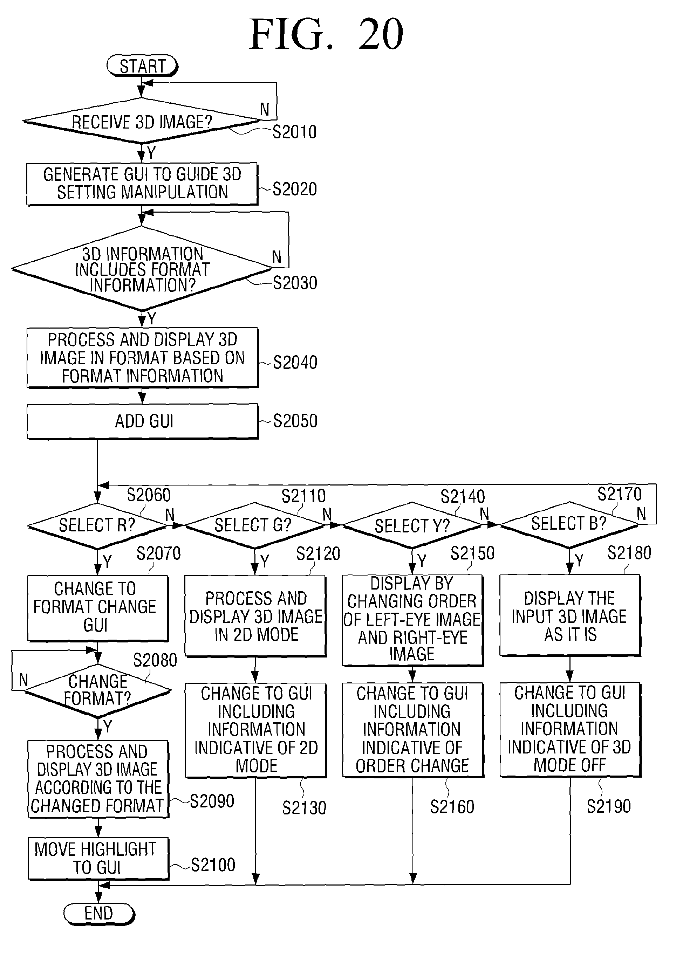

Hereafter, the operations for changing the various settings are provided by referring to FIG. 20. FIG. 20 is a flowchart of a GUI providing method according to an exemplary embodiment of the present invention.

When receiving the 3D image (S2010-Y), the TV 200 generates the GUI for guiding the various setting manipulations for the 3D image (S2020). The TV 200 determines whether there is the format information relating to the received 3D image (S2030).

When there is the format information of the 3D image (S2030-Y), the TV 200 extracts the format information, processes the 3D image according to the format based on the extracted format information, and displays the processed 3D image (S2040).

The TV 200 adds the GUI to the 3D image displayed (S2050). The GUI includes the item corresponding to the R-button, the item corresponding to the G-button, the item corresponding to the Y-button, and the item corresponding to the B-button.

When the user selects the item corresponding to the R-button (S2060-Y), the TV 200 changes the existing GUI to the GUI for the format change (S2070). When the format change command is input from the user through the GUI for the format change (S2080-Y), the TV 200 processes and displays the 3D image in the screen according to the change format (S2090). The TV 200 moves the highlight to the item corresponding to the format selected by the user (S2100).

When the user selects the item corresponding to the G-button (S2110-Y), the TV 200 processes the 3D image in the 2D mode and displays the processed image in the screen (S2120) and changes the existing GUI to the GUI including the information indicative of the 2D mode (S2130).

When the user selects the item corresponding to the Y-button (S2140-Y), the TV 200 displays the 3D image in the screen in the opposite order of the current 3D image by changing the order of the left-eye image and the right-eye image (S2150), and changes the existing GUI to the GUI including the information indicative of the changed order (S2160).

When the user selects the item corresponding to the B-button (S2170-Y), the TV 200 outputs the input 3D image as it is in the screen (S2180) and changes the existing GUI to the GUI including the information indicative of the 3D mode turned off (S2190).

Thus, it may be possible to change the various settings of the 3D image more easily and simply.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. A three-dimensional (3D) image providing method of a display apparatus capable of operating a display mode in a two-dimensional (2D) mode for displaying a 2D image and in a 3D mode, the method comprising:
if a particular manipulation is input from a user in the 2D mode, detecting whether an input image is a 2D image or a 3D image;
if the input image is the 3D image, changing the display mode to the 3D mode and displaying the 3D image;
if the input image is the 2D image, converting the input 2D image to a converted 3D image; and
displaying the converted 3D image by changing the display mode to the 3D mode.

2. The 3D image providing method of claim 1, wherein the converted 3D image comprises a left-eye image and a right-eye image generated based on the 2D image.

3. The 3D image providing method of claim 1, wherein the converting converts the 2D image to the converted 3D image so as to be in a format supportable by the display apparatus.

4. The 3D image providing method of claim 1, further comprising:
if the particular manipulation is re-input from the user in the 3D mode, changing the display mode to the 2D mode.

5. The 3D image providing method of claim 1, further comprising:
if receiving the 3D image, generating a Graphic User Interface (GUI) for guiding at least one setting manipulation for the 3D image; and
trying to recognize a format to apply to the 3D image and displaying the 3D image applied by the recognized format together with the GUI.

6. The 3D image providing method of claim 5, wherein the GUI comprises at least one of an item for changing the format, an item for converting to a 2D image, an item for changing an output order of a left-eye image and a right-eye image of the 3D image, and an item for changing an output state of the 3D image.

7. The 3D image providing method of claim 6, wherein the GUI comprises information relating to a button required to select the item around each item.

8. The 3D image providing method of claim 7, further comprising:
if the button is selected, changing the GUI for guiding the setting manipulation to a GUI for the setting corresponding to the selected button among the format change, the conversion to the 2D image, the output order change, and the output state change.

9. A display apparatus capable of operating a display mode in a 2D mode for displaying a 2D image and in a 3D mode for displaying a 3D mode, the apparatus comprising:
a manipulator for receiving a manipulation of a user; and
a controller for detecting whether an input image is a 2D image or a 3D image ifn a particular manipulation is input through the manipulator in the 2D mode, controlling to display the 3D image by changing the display mode to the 3D mode if the input image is the 3D image, and, and if the input image is the 2D image, converting the input 2D image to a 3D image and controlling to display the converted 3D image by changing the display mode to the 3D mode.

10. The display apparatus of claim 9, wherein the controller converts to the 3D image comprising a left-eye image and a right-eye image generated based on the 2D image.

11. The display apparatus of claim 9, wherein the controller converts the 2D image to the 3D image of a format supportable by the display apparatus.

12. The display apparatus of claim 9, wherein, if the particular manipulation is re-input through the manipulator in the 3D mode, the controller changes the display mode to the 2D mode.

13. The display apparatus of claim 9, further comprising:
a GUI generator for generating a GUI for guiding at least one setting manipulation for the 3D image,
wherein the controller controls to add the generated GUI to the 3D image, to try to recognize a format to apply to the 3D image, and to apply the recognized format to the 3D image.

14. The display apparatus of claim 13, wherein the GUI comprises at least one of an item for changing the format, an item for converting to a 2D image, an item for changing an output order of a left-eye image and a right-eye image of the 3D image, and an item for changing an output state of the 3D image.

15. The display apparatus of claim 14, wherein the GUI comprises information relating to a button required to select the item around each item.
